(19) Europäisches Patentamt
European Patent Office
Office européen des brevets

(11) EP 4 621 912 A1

(12) **EUROPEAN PATENT APPLICATION**
published in accordance with Art. 153(4) EPC

(43) Date of publication:
**24.09.2025 Bulletin 2025/39**

(21) Application number: **23929064.6**

(22) Date of filing: **24.03.2023**

(51) International Patent Classification (IPC):
***H01M 10/0567*** *(2010.01)*

(52) Cooperative Patent Classification (CPC):
**H01M 10/0567;** Y02E 60/10

(86) International application number:
**PCT/CN2023/083749**

(87) International publication number:
**WO 2024/197461 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **LIU, Jiao**
  **Ningde, Fujian 352100 (CN)**
- **ZHANG, Limei**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Gong, Jinping**
**CocreateIP**
**Neumarkter Straße 21**
**81673 München (DE)**

(54) **USE OF COMPOUND AS ELECTROLYTE ADDITIVE, ELECTROLYTE, BATTERY AND ELECTRICAL APPARATUS**

(57) The present application provides use of a compound as an electrolyte additive, an electrolyte, a battery and an electrical apparatus. The present application relates to the use of a compound shown in Formula I as an electrolyte additive. The compound in the present application can capture byproducts generated from oxidative decomposition products of electrolytes, thereby suppressing the increase in the interface impedance of negative electrode plates, and further improving the capacity and cycling performance of batteries.

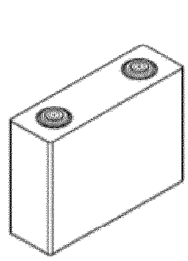


FIG. 1

EP 4 621 912 A1

## Description

### TECHNICAL FIELD

The present application relates to the technical field of batteries, and in particular to use of a compound as an electrolyte additive, an electrolyte, a battery and an electrical apparatus.

### BACKGROUND

In recent years, with the increasingly wide use of secondary batteries, secondary batteries are widely used in energy storage power systems such as water power, thermal power, wind power and solar power stations, as well as electric tools, electric bicycles, electric motorcycles, electric vehicles, military equipment, aerospace and other fields. A lithium supplement is often used in the positive electrode of a secondary battery. However, there is an urgent need to further improve the capacity and cycling performance of the battery while using a positive electrode lithium supplement.

### SUMMARY OF THE INVENTION

The present application is conducted in view of the above problems, and its purpose is to provide use of a compound as an electrolyte additive, an electrolyte, a battery and an electrical apparatus. The positive electrode lithium supplement generates oxygen free radicals during the first cycle of charging, and the oxygen free radicals may further generate oxygen. The oxygen free radicals and the oxygen that may be generated can easily lead to oxidative decomposition of the electrolyte, and the oxidative decomposition products further generate R+ substances. The electrolyte additive of the present application can capture R+ substances and suppress the reduction reaction of the R+ substances in a negative electrode plate, thereby suppressing the thickening of an SEI film caused by the reduction of the R+ substances, and further suppressing the increase in the interface impedance of the negative electrode plate caused by the thickening of the SEI film, so as to improve the cycling performance of the battery and improve the capacity and safety performance of the battery.

In order to achieve the above objectives, a first aspect of the present application provides use of a compound shown in Formula I as an electrolyte additive.

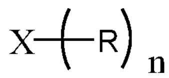

I,

where

X is selected from

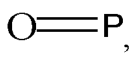

Si and B;
n is selected from 3 and 4; and
n R groups are independently selected from hydroxyl, C1-C6 alkoxy, C2-C6 alkynyl, C2-C10 alkenyloxy and C2-C10 alkynyloxy, and at least one of the n R groups includes an unsaturated bond.

The positive electrode lithium supplement undergoes an irreversible phase change during the first cycle of charging, generating oxygen free radicals, which may further generate oxygen. The oxygen free radicals and the oxygen that may be generated easily lead to oxidative decomposition of the electrolyte, and the oxidative decomposition products further generate R+ substances. The R+ substances easily undergo a reduction reaction in the negative electrode plate, causing the SEI film to thicken, resulting in increase in the interface impedance, deterioration of the cycling performance of the battery, and even lithium precipitation, which also affects the utilization of the battery capacity. The R+ substances may include by-products such as $H^+$ generated by the decomposition of the electrolyte salt due to water produced by the decomposition of the solvent in the electrolyte.

The electrolyte additive of the present application can capture R+ substances further generated from the oxidative decomposition products of the electrolyte, and suppress the reduction of the R+ substances in the negative

electrode plate, thereby suppressing the thickening of the SEI film caused by the reduction of the R+ substances, and further suppressing the increase in the interface impedance caused by the thickening of the SEI film, so as to improve the cycling performance of the battery and improve the capacity and safety performance of the battery.

In any of embodiments, in Formula I, n R groups are independently selected from hydroxyl, C1-C6 alkoxy, C2-C6 alkynyl,

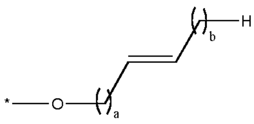

and

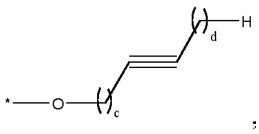

;

, and at least one of the n R groups includes an unsaturated bond; and
a, b, c and d are independently selected from 0, 1, 2, 3 and 4.

Therefore, the thickening of the SEI film caused by the reduction of the R+ substances in the negative electrode plate is further suppressed, the interface impedance of the negative electrode plate is further reduced, and the capacity and cycling performance of the battery are improved.

In any of embodiments, in Formula I, n R groups are independently selected from hydroxyl, methoxy, ethoxy, ethynyl, propargyl, vinyloxy, allyloxy, propenyloxy, ethynyloxy, propynyloxy and propargyloxy, and at least one of the n R groups includes an unsaturated bond.

In any of embodiments, the compound is a compound shown in Formula II:

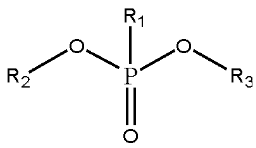

II,

wherein

$R_1$ is selected from hydroxyl, C1-C6 alkoxy, C2-C6 alkynyl, C2-C10 alkenyloxy and C2-C10 alkynyloxy;
$R_2$ and $R_3$ are independently selected from H, C1-C6 alkyl, C2-C10 alkenyl and C2-C10 alkynyl;
and at least one group of $R_1$, $R_2$ and $R_3$ includes an unsaturated bond.

The electrolyte additive shown in Formula II can capture R+ substances further generated from the oxidative decomposition products of the electrolyte, thereby suppressing the thickening of the SEI film caused by the reduction of the R+ substances in the negative electrode, reducing the interface impedance of the negative electrode, and improving the capacity, cycling performance and safety performance of the battery.

In any of embodiments, in Formula II, $R_1$ is selected from hydroxyl, C1-C6 alkoxy, C2-C6 alkynyl,

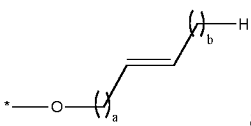

and

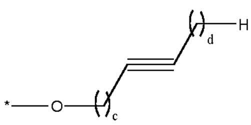

;

$R_2$ and $R_3$ are independently selected from H, C1-C6 alkyl,

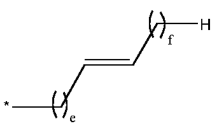

and

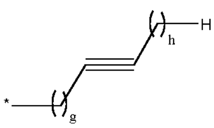

;

a, b, c, d, e, f, g and h are independently selected from 0, 1, 2, 3 and 4; and at least one group of $R_1$, $R_2$ and $R_3$ includes an unsaturated bond.

Optionally, in Formula II, $R_1$is selected from hydroxyl, methoxy, ethoxy, ethynyl, propargyl, vinyloxy, allyloxy, propenyloxy, ethynyloxy, propynyloxy and propargyloxy; $R_2$ and $R_3$ are independently selected from H, methyl, ethyl, vinyl,

allyl, propenyl, ethynyl, propynyl and propargyl; and at least one group of $R_1$, $R_2$ and $R_3$ includes an unsaturated bond.

Therefore, the capture of the R+ substances by the electrolyte additive is improved, the thickening of the SEI film caused by the reduction of the R+ substances in the negative electrode plate is further suppressed, the interface impedance of the negative electrode plate is further reduced, and thus, the capacity and cycling performance of the battery are improved.

In any of embodiments, the compound is a compound shown in Formula III:

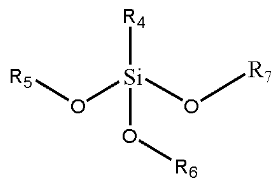

III,

wherein

- $R_4$ is selected from hydroxyl, C1-C6 alkoxy, C2-C6 alkynyl, C2-C10 alkenyloxy and C2-C10 alkynyloxy;
- $R_5$, $R_6$ and $R_7$ are independently selected from H, C1-C6 alkyl, C2-C10 alkenyl and C2-C10 alkynyl;
- and at least one group of $R_4$, $R_5$, $R_6$and $R_7$ includes an unsaturated bond.

The electrolyte additive shown in Formula III can capture R+ substances further generated from the oxidative decomposition products of the electrolyte, thereby suppressing the thickening of the SEI film caused by the reduction of the R+ substances in the negative electrode, reducing the interface impedance of the negative electrode, and improving the capacity, cycling performance and safety performance of the battery.

In any of embodiments, in Formula III, $R_4$ is selected from hydroxyl, C1-C6 alkoxy, C2-C6 alkynyl,

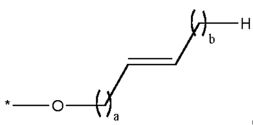 and 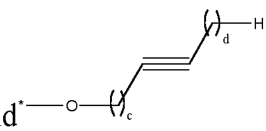 ;

$R_5$, $R_6$ and $R_7$ are independently selected from H, C1-C6 alkyl,

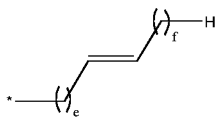 and 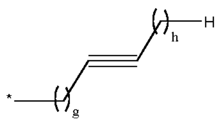 ;

a, b, c, d, e, f, g and h are independently selected from 0, 1, 2, 3 and 4; and at least one group of $R_4$, $R_5$, $R_6$ and $R_7$ includes an unsaturated bond.

Optionally, $R_4$ is selected from hydroxyl, methoxy, ethoxy, ethynyl, propargyl, vinyloxy, allyloxy, propenyloxy, ethynyloxy, propynyloxy and propargyloxy; $R_5$, $R_6$ and $R_7$ are independently selected from H, methyl, ethyl, vinyl, allyl, propenyl, ethynyl, propynyl and propargyl; and at least one group of $R_4$, $R_5$, $R_6$ and $R_7$ includes an unsaturated bond.

Therefore, the capture of the R+ substances by the electrolyte additive is improved, the thickening of the SEI film caused by the reduction of the R+ substances in the negative electrode plate is further suppressed, the interface impedance of the negative electrode plate is further reduced, and thus, the capacity and cycle performance of the battery are improved.

In any of embodiments, the compound is a compound shown in Formula IV:

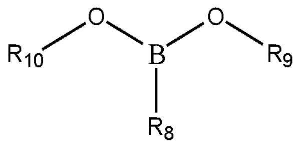

IV,

where

$R_8$ is selected from hydroxyl, C1-C6 alkoxy, C2-C6 alkynyl, C2-C10 alkenyloxy and C2-C10 alkynyloxy;
$R_9$ and $R_{10}$ are independently selected from H, C1-C6 alkyl, C2-C10 alkenyl and C2-C10 alkynyl;
and at least one group of $R_8$, $R_9$ and $R_{10}$ includes an unsaturated bond.

The electrolyte additive shown in Formula IV can capture R+ substances further generated from the oxidative decomposition products of the electrolyte, thereby suppressing the damage of the R+ substances to the SEI film of the negative electrode plate, reducing the interface impedance of the negative electrode plate, improving the capacity of the battery and the cycling performance of the battery cell, and improving the safety performance of the battery.

In any of embodiments, in Formula IV, $R_8$ is selected from hydroxyl, C1-C6 alkoxy, C2-C6 alkynyl,

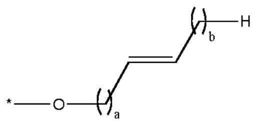 and 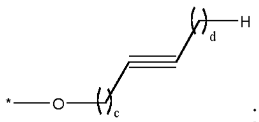 ;

$R_9$ and $R_{10}$ are independently selected from H, C1-C6 alkyl,

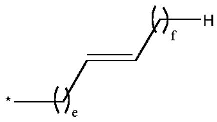 and 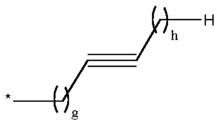 ;

a, b, c, d, e, f, g and h are independently selected from 0, 1, 2, 3 and 4; and at least one group of $R_8$, $R_9$ and $R_{10}$ includes an unsaturated bond.

Optionally, in Formula IV, $R_8$ is selected from hydroxyl, methoxy, ethoxy, ethynyl, propargyl, vinyloxy, allyloxy, propenyloxy, ethynyloxy, propynyloxy and propargyloxy; $R_9$ and $R_{10}$ are independently selected from H, methyl, ethyl, vinyl, allyl, propenyl, ethynyl, propynyl and propargyl; and at least one group of $R_8$, $R_9$ and $R_{10}$ includes an unsaturated bond.

Therefore, the capture of the R+ substances by the electrolyte additive is improved, the damage of the R+ substances to the SEI film of the negative electrode and the thickening of the SEI film caused by continuous reduction of the negative electrode of the electrolyte are further suppressed, the interface impedance of the negative electrode plate is further reduced, and thus, the capacity and cycling performance of the battery are improved.

In any of embodiments, the compound is selected from:

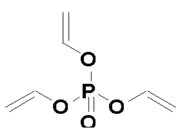 , 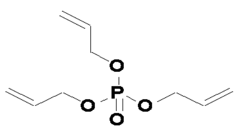 , 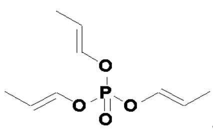 , 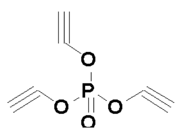 , 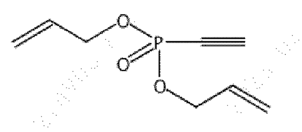 ,

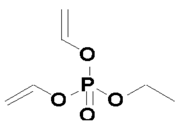 , 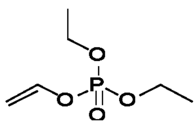 , 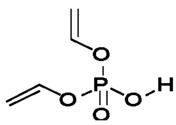 , 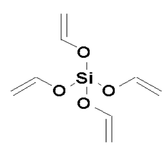 , 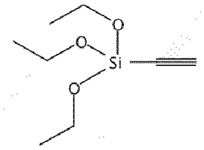 , 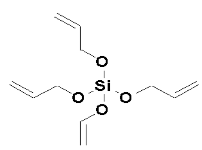 ,

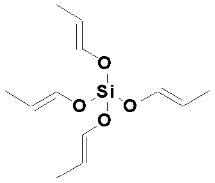, 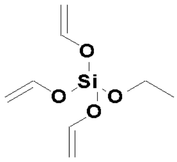, 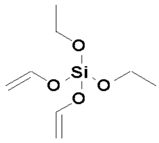, 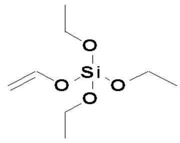, 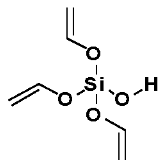, 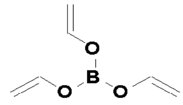,

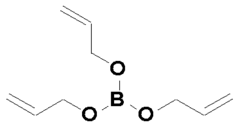, 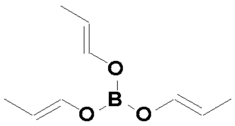, 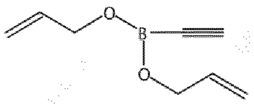, 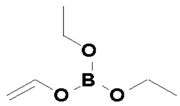

and

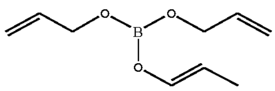.

The above compounds are used to further suppress the damage of the R+ substances to the SEI film of the negative electrode and the thickening of the SEI film caused by continuous reduction of the negative electrode of the electrolyte, the interface impedance of the negative electrode plate is reduced, and thus, the capacity and cycling performance of the battery are improved.

A second aspect of the present application further provides an electrolyte, including an electrolyte additive. The electrolyte additive includes the compounds according to the first aspect of claims.

Therefore, the electrolyte additive used in the present application can capture R+ substances further generated from the oxidative decomposition products of the electrolyte, and suppress the reduction reaction of the R+ substances in the negative electrode plate, thereby suppressing the thickening of the SEI film of the negative electrode caused by the reduction of the R+ substances, and further suppressing the increase in the interface impedance of the negative electrode plate caused by the thickening of the SEI film, so as to improve the cycling performance, capacity and safety performance of the battery.

In any of embodiments, the mass proportion of the electrolyte additive in the electrolyte is 0.005%-25%, optionally 0.01%-20%, more optionally 0.1%-10%, and further optionally 2%-5%. In this way, the cycling performance of the battery can be further improved while maintaining a relatively high battery capacity and improving the safety performance of the battery.

A third aspect of the present application provides a battery, including an electrolyte additive or the electrolyte according to the second aspect of the present application, where the electrolyte additive includes the compounds according to the first aspect of the present application.

In any of embodiments, the battery further includes a positive electrode plate, the positive electrode plate includes a positive electrode current collector and a positive electrode film layer arranged on at least one surface of the positive electrode current collector, and the positive electrode film layer includes a positive electrode lithium supplement $Li_eMO_g$, where

M includes one or more elements of Ni, Co, Fe, Mn, Zn, Mg, Ca, Cu, Sn, Mo, Ru, Ir, V, Nb and Cr;
$2 \leq e \leq 6$, optionally, e is 2, 3, 4, 5 or 6; and
$2 \leq g \leq 4$, optionally, g is 2, 3 or 4.

Therefore, the positive electrode lithium supplement used in the present invention undergoes an irreversible phase change during the first cycle of charging, generating oxygen free radicals, which may further generate oxygen. The oxygen free radicals and the oxygen that may be generated lead to oxidative decomposition of the electrolyte, and the decomposition products further generate R+ substances. The electrolyte additive can effectively capture the R+ substances, further suppress the damage of the R+ substances to the SEI film of the negative electrode and the thickening of the SEI film caused by continuous reduction of the negative electrode of the electrolyte, as well as suppress the increase in the interface impedance of the negative electrode plate, thereby improving the cycling performance, capacity and safety performance of the battery.

In any of embodiments, the positive electrode lithium supplement includes one or more of $Li_2M1O_2$, $Li_2M2O_3$, $Li_3M3O_4$, $Li_5M4O_4$ and $Li_6M5O_4$, where M1 includes one or more elements of Ni, Co, Fe, Mn, Zn, Mg, Ca and Cu, M2 includes one or more elements of Mn, Sn, Mo, Ru and Ir, M3 includes one or more elements of V, Nb, Cr and Mo, M4

includes one or more elements of Fe, Cr, V and Mo, and M5 includes one or more elements of Co, V, Cr and Mo.

In any of embodiments, in the positive electrode lithium supplement, the valence state of at least one metal element other than lithium is lower than its own highest oxidation valence state.

In any of embodiments, the positive electrode lithium supplement includes one or more of $Li_6CoO_4$, $Li_5FeO_4$, $Li_3VO_4$, $Li_2MoO_3$, $Li_2RuO_3$, $Li_2MnO_3$, $Li_2MnO_2$, $Li_2NiO_2$, $Li_2CuO_2$, and $Li_2Cu_kNi_{1-k}M_pO_2$; and optionally, in $Li_2Cu_kNi_{1-p}M_pO_2$, $0<k<1$, $0\leq p<0.1$.

In any of embodiments, the mass proportion of the positive electrode lithium supplement in the positive electrode film layer is 0.05%-15%, optionally 0.1%-10%, more optionally 1%-8%, and further optionally 1%-5%. Therefore, the content of the positive electrode lithium supplement is within the above range, which can make up for the consumption of active lithium ions and make the battery have a higher gram capacity. At the same time, the electrolyte additive of the present application can effectively capture R+ substances further generated from the oxidative decomposition products of the electrolyte, thereby effectively suppressing the thickening of the SEI film caused by the reduction of the R+ substances in the negative electrode, and suppressing the increase in the interface impedance of the negative electrode plate, so as to improve the cycling performance, capacity and safety performance of the battery.

In any of embodiments, the ratio of the mass proportion of the electrolyte additive in the electrolyte to the mass proportion of the positive electrode lithium supplement in the positive electrode film layer is 0.00033-500, optionally 0.0025-40, and more optionally 0.04-5.

When the mass proportion of the compound in the electrolyte and the mass proportion of the positive electrode lithium supplement in the positive electrode film layer are within the above range, the electrolyte additive can effectively capture R+ substances further generated from the oxidative decomposition products of the electrolyte, thereby effectively suppressing the thickening of the SEI film caused by the reduction of the R+ substances in the negative electrode, and suppressing the increase in the interface impedance of the negative electrode plate, so as to improve the cycling performance, capacity and safety performance of the battery.

In any of embodiments, the positive electrode film layer further includes a positive electrode active material, and the ratio of the $D_v50$ particle size of the positive electrode lithium supplement to the $D_v50$ particle size of the positive electrode active material is 0.05-15, optionally 1-10, and more optionally 2-8.

When the ratio of the $D_v50$ particle size of the positive electrode lithium supplement to the $D_v50$ particle size of the positive electrode active material is within the above range, the contact area between the positive electrode lithium supplement and the electrolyte can be kept within a certain range, so as to improve the ion conductivity of the positive electrode plate, thereby improving the capacity utilization of the battery and the rate performance after storage, while also suppressing the side reaction of the electrolyte and improving the cycling performance of the battery.

In any of embodiments, the active specific surface area of the positive electrode plate is greater than 0 $cm^2/g$ and less than or equal to 25 $cm^2/g$, optionally greater than 0 $cm^2/g$ and less than or equal to 20 $cm^2/g$, more optionally greater than or equal to 0.5 $cm^2/g$ and less than or equal to 20 $cm^2/g$, and further optionally greater than or equal to 2 $cm^2/g$ and less than or equal to 10 $cm^2/g$.

The active specific surface area of the positive electrode plate within the above range helps to reduce the gas production during the first cycle of charging, and improve the black spots on the negative electrode interface and the local lithium deposition problems on the negative electrode, thereby suppressing the increase in the interface impedance of the negative electrode, improving the cycling performance of the battery, and also helping to reduce the polarization degree of the lithium-ion battery and increase the capacity of the battery.

A fourth aspect of the present application provides an electrical apparatus, including the battery according to the third aspect of the present application.

## BRIEF DESCRIPTION OF DRAWINGS

FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical apparatus in which a secondary battery is used as a power source according to an embodiment of the present application.

Description of reference numerals:
1. battery pack; 2. upper box; 3. lower box; 4. battery module; 5. secondary battery; 51. case; 52. electrode assembly; 53.

top cover assembly.

## DETAILED DESCRIPTION

Hereinafter, embodiments of use of a compound as an electrolyte additive, an electrolyte, a battery and an electrical apparatus of the present application are described in detail and specifically disclosed with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2-3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

If not specifically stated, all steps of the present application may be performed sequentially or randomly, preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, "including" and "comprising" may mean that it is possible to include or comprise other components not listed, and it is also possible to only include or comprise the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

If not otherwise specified, in the present application, the term "C1-C6 alkyl" refers to straight or branched alkyl having 1 to 6 carbon atoms, such as C1-C4 alkyl, C1-C2 alkyl, C1 alkyl, C2 alkyl, C3 alkyl, C4 alkyl, C5 alkyl or C6 alkyl. Specific examples include, but are not limited to, methyl, ethyl, propyl, isopropyl, n-butyl, isobutyl, sec-butyl, tert-butyl, n-pentyl, n-hexyl, and the like.

If not otherwise specified, in the present application, the term "C2-C10 alkynyl" refers to straight or branched hydrocarbyl having 2 to 10 carbon atoms and at least one carbon-carbon triple bond, for example, C2-C8 alkynyl, C2-C6 alkynyl, C2-C4 alkynyl, C2 alkynyl, C3 alkynyl, C5 alkynyl, C6 alkynylor C8 alkynyl. Specific examples include, but are not limited to, ethynyl, propynyl, propargyl, and the like.

If not otherwise specified, in the present application, the term "C2-C10 alkenyl" refers to straight or branched hydrocarbyl having 2 to 10 carbon atoms and at least one carbon-carbon double bond, for example, C2-C8 alkenyl, C2-C6 alkenyl, C2-C4 alkenyl, C2 alkenyl, C3 alkenyl, C5 alkenyl, C6 alkenyl, C7 alkenyl or C8 alkenyl. Specific examples include, but are not limited to vinyl, propenyl, allyl, 1,3-butadienyl, and the like.

If not otherwise specified, in the present application, the term "C1-C6 alkoxy" refers to a group formed in the form of C1-C6 alkyl-O-, where the definition of "C1-C6alkyl" is described above. Specific examples include, but are not limited to, methoxy, ethoxy, propoxy, isopropoxy, butoxy, 2-butoxy, isobutoxy, sec-butoxy, tert-butoxy, pentyloxy, hexyloxy, and the like.

If not otherwise specified, in the present application, the term "C2-C10 alkenyloxy" refers to a group formed in the form of C2-C10 alkenyl-O-, where the definition of "C2-C10 alkenyl" is described above. Specific examples include, but are

not limited to, vinyloxy, propenyloxy, allyloxy, and the like.

If not otherwise specified, in the present application, the term "C2-C10 alkynyloxy" refers to a group formed in the form of C2-C10 alkynyl-O-, where the definition of "C2-C10 alkynyl" is described above. Specific examples include, but are not limited to, ethynyloxy, propynyloxy, propargyloxy, and the like.

Unless otherwise specified, in the present application, the term "Dv50 particle size" refers to a particle size at which the volume accumulation is 50% from the smaller particle size side in a volume-based particle size distribution.

[Secondary battery]

A secondary battery also known as a rechargeable battery or a storage battery refers to a battery that can be used continually by activating an active material in a charging manner after the battery is discharged.

Generally, the secondary battery includes a positive electrode plate, a negative electrode plate, a separator and an electrolyte. During charging and discharging of the battery, active ions (e.g., lithium ions) are intercalated and deintercalated back and forth between the positive electrode plate and the negative electrode plate. The separator is arranged between the positive electrode plate and the negative electrode plate, and mainly functions to prevent a short circuit between the positive electrode and the negative electrode while allowing active ions to pass through. The electrolyte mainly serves to conduct active ions between the positive electrode plate and the negative electrode plate.

[Use of compounds as electrolyte additives]

An embodiment of the present application provides use of a compound shown in Formula I as an electrolyte additive:

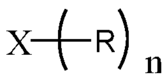

I,

where

X is selected from

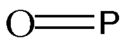,

Si and B;

n is selected from 3 and 4; and

n R groups are independently selected from hydroxyl, C1-C6 alkoxy, C2-C6 alkynyl, C2-C10 alkenyloxy (optionally, C2-C6 alkenyloxy) and C2-C10 alkynyloxy (optionally, C2-C6 alkynyloxy), and at least one of the n R groups includes an unsaturated bond.

The positive electrode lithium supplement undergoes an irreversible phase change during the first cycle of charging, generating oxygen free radicals, which may further generate oxygen. The oxygen free radicals and the oxygen that may be generated easily lead to oxidative decomposition of the electrolyte, and the oxidative decomposition products further generate R+ substances. The R+ substances easily undergo a reduction reaction in the negative electrode plate, causing the SEI film to thicken, resulting in increase in the interface impedance, deterioration of the cycling performance of the battery, and even lithium precipitation, which also affects the utilization of the battery capacity. The R+ substances may include by-products such as $H^+$ generated by the decomposition of the electrolyte salt due to water produced by the decomposition of the solvent in the electrolyte.

Although the mechanism is not yet clear, the applicant unexpectedly discovered that the electrolyte additive of the present application can capture R+ substances further generated from the oxidative decomposition products of the electrolyte, and suppress the reduction of the R+ substances in the negative electrode plate, thereby suppressing the thickening of the SEI film caused by the reduction of the R+ substances, and further suppressing the increase in the interface impedance caused by the thickening of the SEI film, so as to improve the cycling performance of the battery and improve the capacity and safety performance of the battery.

In some embodiments, in Formula I, n R groups are independently selected from hydroxyl, C1-C6 alkoxy, C2-C6 alkynyl,

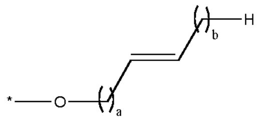 and 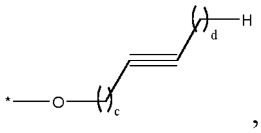 ,

and at least one of the n R groups includes an unsaturated bond; and
a, b, c and d are independently selected from 0, 1, 2, 3 and 4.

Therefore, the thickening of the SEI film caused by the reduction of the R+ substances in the negative electrode plate is further suppressed, the interface impedance of the negative electrode plate is further reduced, and the capacity and cycling performance of the battery are improved.

In some embodiments, in Formula I, n R groups are independently selected from hydroxyl, methoxy, ethoxy, ethynyl, propargyl, vinyloxy, allyloxy, propenyloxy, ethynyloxy, propynyloxy and propargyloxy, and at least one of the n R groups includes an unsaturated bond.

In some embodiments, in Formula I, n R groups are independently selected from hydroxyl, ethoxy, ethynyl, vinyloxy, allyloxy, propenyloxy and ethynyloxy, and at least one of the n R groups includes an unsaturated bond.

In some embodiments, the compound is a compound shown in Formula II:

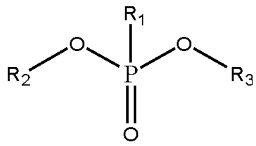

II,

where

$R_1$ is selected from hydroxyl, C1-C6 alkoxy, C2-C6 alkynyl, C2-C10 alkenyloxy (optionally, C2-C6 alkenyloxy) and C2-C10 alkynyloxy (optionally, C2-C6 alkynyloxy);
$R_2$ and $R_3$ are independently selected from H, C1-C6 alkyl, C2-C10 alkenyl (optionally, C2-C6 alkenyl) and C2-C10 alkynyl (optionally, C2-C6 alkynyl);
and at least one group of $R_1$, $R_2$ and $R_3$ includes an unsaturated bond.

The electrolyte additive shown in Formula II can capture R+ substances further generated from the oxidative decomposition products of the electrolyte, thereby further suppressing the damage of the R+ substances to the SEI film of the negative electrode and the thickening of the SEI film caused by continuous reduction of the negative electrode of the electrolyte, reducing the interface impedance of the negative electrode, and improving the capacity, cycling performance and safety performance of the battery.

In some embodiments, in Formula II, $R_1$ is selected from hydroxyl, C1-C6 alkoxy, C2-C6 alkynyl,

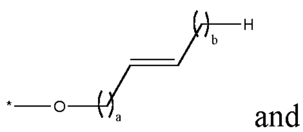 and 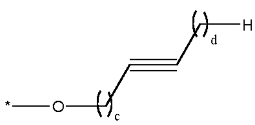 ;

$R_2$ and $R_3$ are independently selected from H, C1-C6 alkyl

, 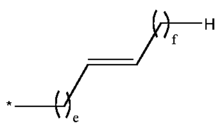 and 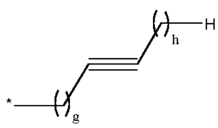 ;

a, b, c, d, e, f, g and h are independently selected from 0, 1, 2, 3 and 4; and at least one group of $R_1$, $R_2$ and $R_3$ includes an unsaturated bond.

Optionally, in Formula II, $R_1$ is selected from hydroxyl, methoxy, ethoxy, ethynyl, propargyl, vinyloxy, allyloxy, propenyloxy, ethynyloxy, propynyloxy and propargyloxy; $R_2$ and $R_3$ are independently selected from H, methyl, ethyl, vinyl, allyl, propenyl, ethynyl, propynyl and propargyl; and at least one group of $R_1$, $R_2$ and $R_3$ includes an unsaturated bond.

Therefore, the capture of the R+ substances by the electrolyte additive is improved, the damage of the R+ substances to the SEI film of the negative electrode and the thickening of the SEI film caused by continuous reduction of the negative electrode of the electrolyte are further suppressed, the interface impedance of the negative electrode plate is further reduced, and thus, the capacity and cycling performance of the battery are improved.

In some embodiments, in Formula II, $R_1$ is selected from ethoxy, ethynyl, vinyloxy, allyloxy, propenyloxy and ethynyloxy; $R_2$ and $R_3$ are independently selected from H, ethyl, vinyl, allyl, propenyl and ethynyl; and at least one group of $R_1$, $R_2$ and $R_3$ includes an unsaturated bond.

In some embodiments, the compound is a compound shown in Formula III:

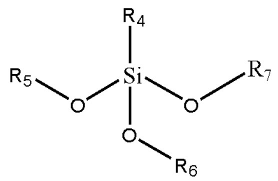

III,

where

$R_4$ is selected from hydroxyl, C1-C6 alkoxy, C2-C6 alkynyl, C2-C10 alkenyloxy (optionally, C2-C6 alkenyloxy) and C2-C10 alkynyloxy (optionally, C2-C6 alkynyloxy);

$R_5$, $R_6$ and $R_7$ are independently selected from H, C1-C6 alkyl, C2-C10 alkenyl (optionally, C2-C6 alkenyl) and C2-C10 alkynyl (optionally, C2-C6 alkynyl);

and at least one group of $R_4$, $R_5$, $R_6$and $R_7$ includes an unsaturated bond.

The electrolyte additive shown in Formula III can capture R+ substances further generated from the oxidative decomposition products of the electrolyte, thereby further suppressing the damage of the R+ substances to the SEI film of the negative electrode and the thickening of the SEI film caused by continuous reduction of the negative electrode of the electrolyte, reducing the interface impedance of the negative electrode, and improving the capacity, cycling performance and safety performance of the battery.

In some embodiments, in Formula III, $R_4$ is selected from hydroxyl, C1-C6 alkoxy, C2-C6 alkynyl,

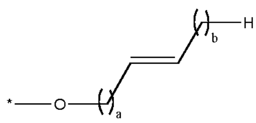 and 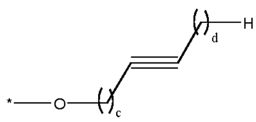 ;

$R_5$, $R_6$ and $R_7$ are independently selected from H, C1-C6 alkyl,

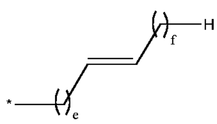 and 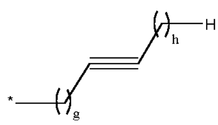 ;

a, b, c, d, e, f, g and h are independently selected from 0, 1, 2, 3 and 4; and at least one group of $R_4$, $R_5$, $R_6$ and $R_7$ includes an unsaturated bond.

Optionally, $R_4$ is selected from hydroxyl, methoxy, ethoxy, ethynyl, propargyl, vinyloxy, allyloxy, propenyloxy, ethynyloxy, propynyloxy and propargyloxy; $R_5$, $R_6$ and $R_7$ are independently selected from H, methyl, ethyl, vinyl, allyl, propenyl, ethynyl, propynyl and propargyl; and at least one group of $R_4$, $R_5$, $R_6$ and $R_7$ includes an unsaturated bond.

Therefore, the capture of the R+ substances by the electrolyte additive is improved, the thickening of the SEI film caused by the reduction of the R+ substances in the negative electrode plate is further suppressed, the interface impedance of the negative electrode plate is further reduced, and thus, the capacity and cycling performance of the battery are improved.

In some embodiments, $R_4$ is selected from hydroxyl, ethoxy, ethynyl, vinyloxy, allyloxy and propenyloxy; $R_5$, $R_6$ and $R_7$ are independently selected from H, ethyl, vinyl, allyl and propenyl; and at least one group of $R_4$, $R_5$, $R_6$ and $R_7$ includes an unsaturated bond.

In some embodiments, the compound is a compound shown in Formula IV:

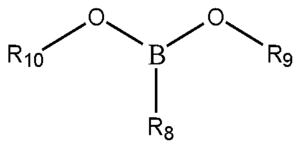

IV,

where

$R_8$ is selected from hydroxyl, C1-C6 alkoxy, C2-C6 alkynyl, C2-C10 alkenyloxy (optionally, C2-C6 alkenyloxy) and C2-C10 alkynyloxy (optionally, C2-C6 alkynyloxy);
$R_9$ and $R_{10}$ are independently selected from H, C1-C6 alkyl, C2-C10 alkenyl (optionally, C2-C6 alkenyl) and C2-C10 alkynyl (optionally, C2-C6 alkynyl);
and at least one group of $R_8$, $R_9$ and $R_{10}$ includes an unsaturated bond.

The electrolyte additive shown in Formula IV can capture R+ substances further generated from the oxidative decomposition products of the electrolyte, thereby further suppressing the damage of the R+ substances to the SEI film of the negative electrode and the thickening of the SEI film caused by continuous reduction of the negative electrode of the electrolyte, reducing the interface impedance of the negative electrode, and improving the capacity, cycling performance and safety performance of the battery.

In some embodiments, in Formula IV, $R_8$ is selected from hydroxyl, C1-C6 alkoxy, C2-C6 alkynyl,

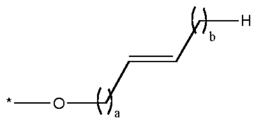 and 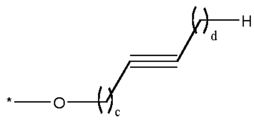 ;

$R_9$ and $R_{10}$ are independently selected from H, C1-C6 alkyl,

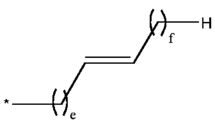 and 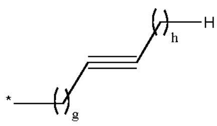

; a, b, c, d, e, f, g and h are independently selected from 0, 1, 2, 3 and 4; and at least one group of $R_8$, $R_9$ and $R_{10}$ includes an unsaturated bond.

Optionally, in Formula IV, $R_8$ is selected from hydroxyl, methoxy, ethoxy, ethynyl, propargyl, vinyloxy, allyloxy, propenyloxy, ethynyloxy, propynyloxy and propargyloxy; $R_9$ and $R_{10}$ are independently selected from H, methyl, ethyl, vinyl, allyl, propenyl, ethynyl, propynyl and propargyl; and at least one group of $R_8$, $R_9$ and $R_{10}$ includes an unsaturated bond.

Therefore, the capture of the R+ substances by the electrolyte additive is improved, the thickening of the SEI film caused by the reduction of the R+ substances in the negative electrode plate is further suppressed, the interface impedance of the negative electrode plate is further reduced, and thus, the capacity and cycling performance of the battery are improved.

In some embodiments, in Formula IV, $R_8$ is selected from ethoxy, ethynyl, vinyloxy, allyloxy and propenyloxy; $R_9$ and $R_{10}$ are independently selected from ethyl, vinyl, allyl and propenyl; and at least one group of $R_8$, $R_9$ and $R_{10}$ includes an unsaturated bond.

In some embodiments, the structural formula of propenyl is

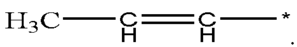.

In some embodiments, the structural formula of allyl is

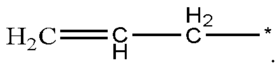

In some embodiments, the structural formula of propynyl is

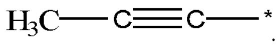

In some embodiments, the structural formula of propargyl is

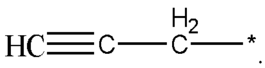

In some embodiments, the structural formula of vinyloxy is

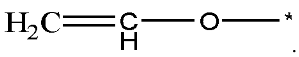

In some embodiments, the structural formula of propenyloxy is

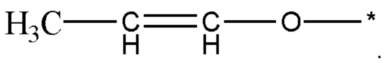

In some embodiments, the structural formula of allyloxy is

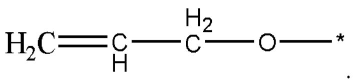

In some embodiments, the structural formula of ethynyloxy is

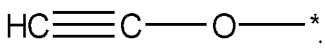

In some embodiments, the structural formula of propynyloxy is

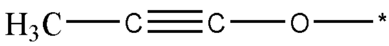

In some embodiments, the structural formula of propargyloxy is

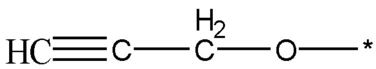

In some embodiments, the compound is selected from:

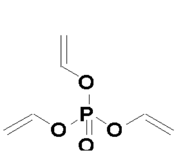 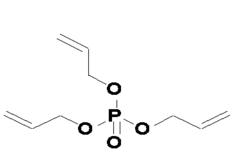, 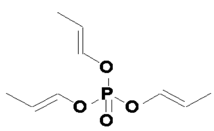, 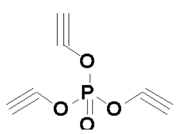, 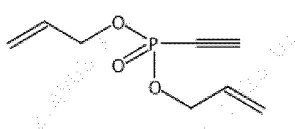,

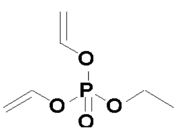, 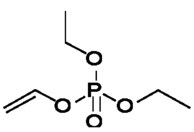, 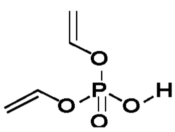, 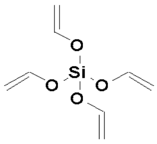, 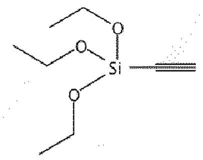, 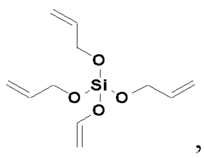,

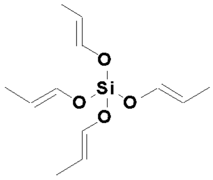, 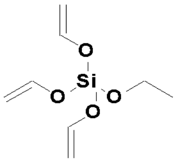, 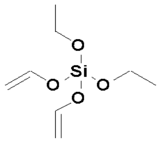, 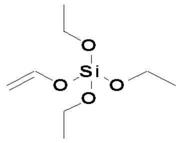, 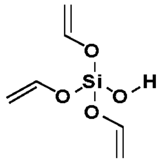, 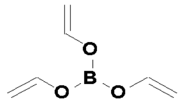,

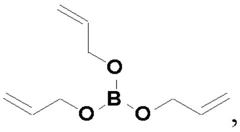, 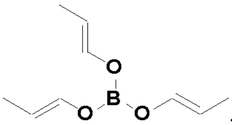, 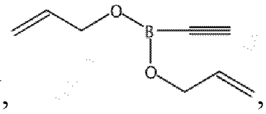, 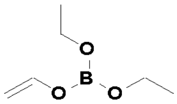 and 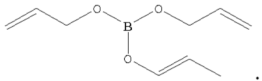.

The numbers of the above compounds are shown in the following table.

| Number | Structural formula | CAS number | Number | Structural formula | CAS number |
|---|---|---|---|---|---|
| Compound 1-1 | 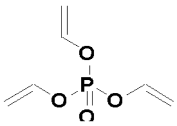 | 19024-82-9 | Compound 2-5 | 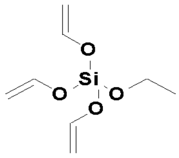 | 1174909-88-6 |
| Compound 1-2 | 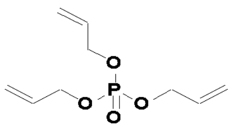 | 1623-19-4 | Compound 2-6 | 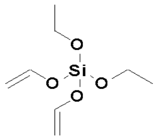 | 1174909-81-9 |
| Compound 1-3 | 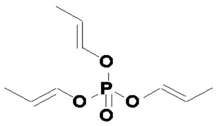 | 876499-07-9 | Compound 2-7 | 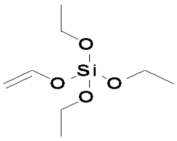 | 18293-74-8 |
| Compound 1-4 | 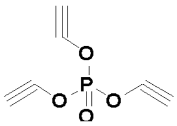 | 1902915-70-1 | Compound 2-8 | 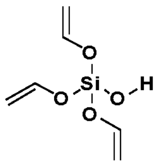 | 1174910-20-3 |
| Compound 1-5 | 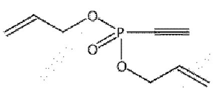 | 7727-45-9 | Compound 3-1 | 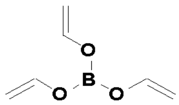 | 478359-99-8 |
| Compound 1-6 | 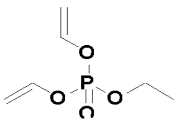 | 1158919-36-8 | Compound 3-2 | 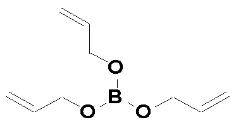 | 1693-71-6 |
| Compound 1-7 | 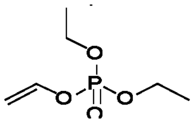 | 4851-64-3 | Compound 3-3 | 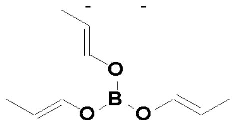 | 177786-93-5 |
| Compound 1-8 | 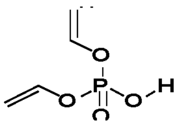 | 63249-66-1 | Compound 3-4 | 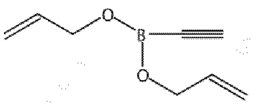 | 93386-82-4 |

(continued)

| Number | Structural formula | CAS number | Number | Structural formula | CAS number |
|---|---|---|---|---|---|
| Compound 2-1 | 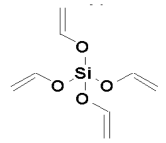 | 18339-86-1 | Compound 3-5 | 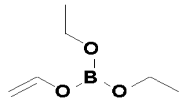 | 90011-01-1 |
| Compound 2-2 | 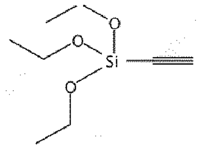 | 5700-28-7 | Compound 3-6 | 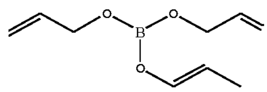 | 129078-99-5 |
| Compound 2-3 | 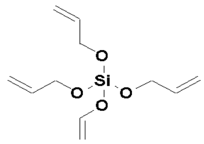 | 1067-43-2 | | | |
| Compound 2-4 | 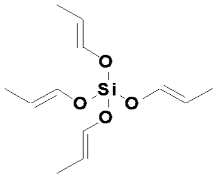 | 177786-92-4 | | | |

The above compounds are used to further suppress the damage of the R+ substances to the SEI film of the negative electrode and the thickening of the SEI film caused by continuous reduction of the negative electrode of the electrolyte, the interface impedance of the negative electrode plate is reduced, and thus, the capacity and cycling performance of the battery are improved.

The preparation method of the compound shown in Formula II of the present application ($R_2$ and $R_3$ are the same) refers to the following synthetic route:

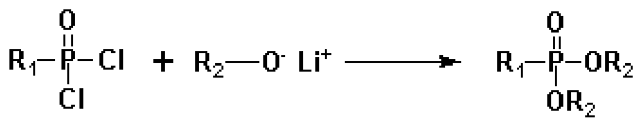

where the definitions of $R_1$ and $R_2$ are described above.

The preparation method of the compound shown in Formula III of the present application refers to the following synthetic route:

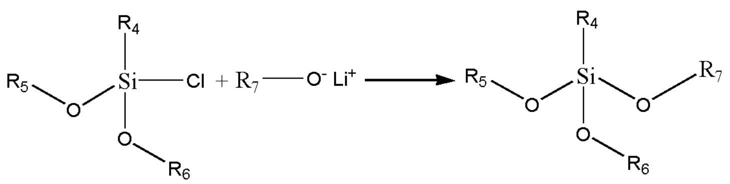

where the definitions of $R_4$, $R_5$, $R_6$ and $R_7$ are described above.

The preparation method of the compound shown in Formula IV of the present application refers to the following synthetic route:

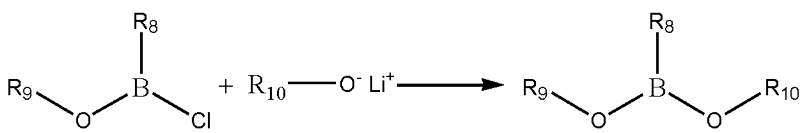

where the definitions of $R_8$, $R_9$ and $R_{10}$ are described above.

There is no particular limitation on the solvent used in the above preparation method, provided that it does not hinder the reaction, and the solvent includes, but is not limited to, ether solvents such as diethyl ether, tetrahydrofuran and dioxane, halogenated hydrocarbons, and the like.

The reaction temperature and time used in the above preparation method are determined according to the properties of reaction raw materials and solvents. The reaction temperature can usually be in the range of 20°C-100°C, and the reaction time can usually be in the range of 0.5 h-48 h.

The reaction raw materials used in the above preparation method are mostly conventional raw materials and can be directly purchased from the market.

The aforementioned compound of the present application is used in an electrolyte or a battery; optionally, the electrolyte is an electrolyte for a battery containing a positive electrode lithium supplement; and optionally, the battery is a battery containing a positive electrode lithium supplement.

[Electrolyte]

The present application provides an electrolyte, including an electrolyte additive. The electrolyte additive includes the aforementioned compound.

Therefore, the electrolyte additive used in the present application can capture R+ substances further generated from the oxidative decomposition products of the electrolyte, and suppress the damage of the R+ substances to the SEI film of the negative electrode and the thickening of the SEI film caused by continuous reduction of the negative electrode of the electrolyte, thereby suppressing the increase in the interface impedance of the negative electrode plate caused by the thickening of the SEI film, so as to improve the cycling performance, capacity and safety performance of the battery.

In some embodiments, the electrolyte additive may be added to the electrolyte in an adding mode of, but not limited to, actively adding to the electrolyte, dissolving or seeping from the positive electrode into the electrolyte, dissolving or seeping from the negative electrode into the electrolyte, or dissolving or seeping from the separator into the electrolyte.

In some embodiments, the mass proportion $W_1$ of the electrolyte additive in the electrolyte is 0.005%-25%, optionally 0.01%-20%, more optionally 0.1%-10%, and further optionally 2%-5%. In this way, the cycling performance of the battery can be further improved while maintaining a relatively high battery capacity and improving the safety performance of the battery.

The electrolyte serves to conduct ions between the positive electrode plate and the negative electrode plate. For example, the electrolyte may be in a liquid, gel, or full solid state.

In some embodiments, the electrolyte is in a liquid state.

In some embodiments, the electrolyte further includes an electrolyte salt and a solvent.

In some embodiments, the type of the electrolyte salt is not particularly limited and may be selected according to actual needs. Specifically, the electrolyte salt may be selected from one or more of $LiN(C_xF_{2x+1}SO_2)(C_yF_{2y+1}SO_2)$, $LiPF_6$, $LiBF_4$, LiBOB, $LiAsF_6$, $Li(FSO_2)_2N$, $LiCF_3SO_3$ and $LiClO_4$, where x and y are natural numbers. The concentration range of the electrolyte salt is 0.5-2.5 M, optionally, 0.7-2 M.

In some embodiments, the type of the solvent is not particularly limited and may be selected according to actual needs. Specifically, the solvent may further include one or more of other types of chain carbonates, cyclic carbonates and carboxylates, where the types of the chain carbonates, cyclic carbonates and carboxylates are not specifically limited and may be selected according to actual needs. Preferably, the solvent may further include one or more of diethyl carbonate, dipropyl carbonate, ethyl methyl carbonate, methyl propyl carbonate, ethyl propyl carbonate, ethylene carbonate, propylene carbonate, butene carbonate, $\gamma$-butyrolactone, methyl formate, ethyl formate, methyl acetate, ethyl acetate, propyl acetate, methyl propionate, ethyl propionate, methyl propionate and tetrahydrofuran.

In some embodiments, the electrolyte additive may also optionally include additives with other functions. For example, the electrolyte additive may include a negative electrode film-forming additive, a positive electrode film-forming additive, an additive for improving the overcharge performance of the battery, an additive for improving the high temperature or low temperature performance of the battery, and the like.

[Positive electrode plate]

The positive electrode plate usually includes a positive electrode current collector and a positive electrode film layer arranged on at least one surface of the positive electrode current collector, and the positive electrode film layer includes a positive electrode lithium supplement $Li_eMO_g$, where M includes one or more elements of Ni, Co, Fe, Mn, Zn, Mg, Ca, Cu, Sn, Mo, Ru, Ir, V, Nb and Cr;

$2 \leq e \leq 6$, optionally, e is 2, 3, 4, 5 or 6, and e may also be a decimal in the range of 2-6; and
$2 \leq g \leq 4$, optionally, g is 2, 3 or 4, and g may also be a decimal in the range of 2-4.

Therefore, the positive electrode lithium supplement used in the present invention undergoes an irreversible phase change during the first cycle of charging, generating oxygen free radicals, which may further generate oxygen. The oxygen free radicals and the oxygen that may be generated lead to oxidative decomposition of the electrolyte, and the decomposition products further generate R+ substances. The electrolyte additive can effectively capture the R+ substances, suppress the damage of the R+ substances to the SEI film of the negative electrode and the thickening of the SEI film caused by continuous reduction of the negative electrode of the electrolyte, as well as suppress the increase in the interface impedance of the negative electrode plate, thereby improving the cycling performance, capacity and safety performance of the battery.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector may be a metal foil or a composite current collector. For example, an aluminum foil may be used as the metal foil. The composite current collector may include a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode lithium supplement includes one or more of $Li_2M1O_2$, $Li_2M2O_3$, $Li_3M3O_4$, $Li_5M4O_4$ and $Li_6M5O_4$, where M1 includes one or more elements of Ni, Co, Fe, Mn, Zn, Mg, Ca and Cu, M2 includes one or more elements of Mn, Sn, Mo, Ru and Ir, M3 includes one or more elements of V, Nb, Cr and Mo, M4 includes one or more elements of Fe, Cr, V and Mo, and M5 includes one or more elements of Co, V, Cr and Mo.

In some embodiments, in the positive electrode lithium supplement, the valence state of at least one metal element other than lithium is lower than its own highest oxidation valence state.

In some embodiments, the highest oxidation valence state refers to a valence state obtained when all valence electrons (or outermost electrons) of an element are lost or transferred.

In some embodiments, the positive electrode lithium supplement includes one or more of $Li_6CoO_4$, $Li_5FeO_4$, $Li_3VO_4$, $Li_2MoO_3$, $Li_2RuO_3$, $Li_2MnO_3$, $Li_2MnO_2$, $Li_2NiO_2$, $Li_2CuO_2$, and $Li_2Cu_kNi_{1-k}M_pO_2$; and optionally, in $Li_2Cu_kNi_{1-p}M_pO_2$, $0<k<1$, $0\leq p<0.1$.

In some embodiments, the mass proportion $W_2$ of the positive electrode lithium supplement in the positive electrode film layer is 0.05%-15%, optionally 0.1%-10%, more optionally 1%-8%, and further optionally 1%-5%, for example, it may be 0.05%, 0.08%, 0.1%, 2%, 3%, 4%, 5%, 6%, 7%, 8%, 9%, 10%, 11%, 12%, 13%, 14%, 15% and the range consisting of any of the above values.

Therefore, the content of the positive electrode lithium supplement is within the above range, which can make up for the consumption of active lithium ions and make the battery have a higher gram capacity. At the same time, the electrolyte additive of the present application can effectively capture R+ substances further generated from the oxidative decomposition products of the electrolyte, thereby effectively suppressing the damage of the R+ substances to the SEI film of the negative electrode and the thickening of the SEI film caused by continuous reduction of the negative electrode of the electrolyte, and suppressing the increase in the interface impedance of the negative electrode plate, so as to improve the cycling performance, capacity and safety performance of the battery.

In some embodiments, the mass proportion $W_1$ of the electrolyte additive in the electrolyte and the mass proportion $W_2$ of the positive electrode lithium supplement in the positive electrode film layer satisfy the following relationship: $0.00033\leq W_1/W_2\leq 500$, optionally $0.0025\leq W_1/W_2\leq 40$, more optionally $0.04\leq W_1/W_2\leq 5$, $W_1/W_2$, for example, it may be 0.00033, 0.001, 0.003, 0.005, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 10, 13, 15, 20, 25, 30, 40, 45, 50 and the range consisting of any of the above values.

When the mass proportion of the compound in the electrolyte and the mass proportion of the positive electrode lithium supplement in the positive electrode film layer are within the above range, the electrolyte additive can effectively capture R+ substances further generated from the oxidative decomposition products of the electrolyte, thereby effectively suppressing the thickening of the SEI film caused by the reduction of the R+ substances in the negative electrode, and suppressing the increase in the interface impedance of the negative electrode plate, so as to improve the cycling performance, capacity and safety performance of the battery.

In some embodiments, the positive electrode film layer further includes a positive electrode active material, and the ratio of the $D_v50$ particle size of the positive electrode lithium supplement to the $D_v50$ particle size of the positive electrode active material is 0.05-15, optionally 1-10, and more optionally 2-8, for example, it may be 0.05, 0.07, 0.1, 0.5, 0.8, 1, 2, 3, 4, 5, 6, 7, 8, 9, 10, 11, 12, 13, 14, 15 and the range consisting of any of the above values.

When the ratio of the $D_v50$ particle size of the positive electrode lithium supplement to the $D_v50$ particle size of the

positive electrode active material is within the above range, the contact area between the positive electrode lithium supplement and the electrolyte can be kept within a certain range, so as to improve the ion conductivity of the positive electrode plate, thereby improving the capacity utilization of the battery and the rate performance after storage, while also suppressing the side reaction of the electrolyte and improving the cycling performance of the battery.

In some embodiments, the $D_v50$ particle size may be measured by a common method in the art, for example, it may be measured according to the process in GB/T 19077-2016 "Particle Size Distribution Laser Diffraction Method", and the instrument used may be a laser particle size analyzer.

In some embodiments, the active specific surface area of the positive electrode plate is greater than 0 $cm^2/g$ and less than or equal to 25 $cm^2/g$, optionally, may be greater than 0 $cm^2/g$ and less than or equal to 20 $cm^2/g$, more optionally, may be greater than or equal to 0.5 $cm^2/g$ and less than or equal to 20 $cm^2/g$, and further optionally, may be greater than or equal to 2 $cm^2/g$ and less than or equal to 10 $cm^2/g$, for example, 0.01$cm^2/g$, 0.05 $cm^2/g$, 0.08 $cm^2/g$, 0.1 $cm^2/g$, 0.2 $cm^2/g$, 0.3 $cm^2/g$, 0.5 $cm^2/g$, 0.7 $cm^2/g$, 1 $cm^2/g$, 2 $cm^2/g$, 3 $cm^2/g$, 4 $cm^2/g$, 5 $cm^2/g$, 6 $cm^2/g$, 8 $cm^2/g$, 10 $cm^2/g$, 12 $cm^2/g$, 13 $cm^2/g$, 15 $cm^2/g$, 17 $cm^2/g$, 19 $cm^2/g$, 20 $cm^2/g$, 21 $cm^2/g$, 23 $cm^2/g$, 24 $cm^2/g$, 25 $cm^2/g$ and the range consisting of any of the above values.

The active specific surface area of the positive electrode plate within the above range helps to reduce the gas production during the first cycle of charging, and improve the black spots on the negative electrode interface and the local lithium deposition problems on the negative electrode, thereby suppressing the increase in the interface impedance of the negative electrode, improving the cycling performance of the battery, and also helping to reduce the polarization degree of the lithium-ion battery and increase the capacity of the battery.

In some embodiments, the active specific surface area of the positive electrode plate is the ratio of the active surface area of the positive electrode plate to the weight of the positive electrode plate, and the unit may be, for example, $cm^2/g$. The active surface area of the positive electrode plate refers to the effective active surface area on the positive electrode plate, which is generally measured by introducing an electrochemical redox couple as a probe molecule and measuring electrochemical behaviors.

In some embodiments, the test method for the active surface area of the positive electrode is generally as follows: when a certain potential is applied, electrons are transferred to active sites on the surface of the positive electrode active material in the positive electrode plate through the current collector, and then probe molecules undergo redox reactions. By testing cyclic voltage-current curves of the probe molecules on the surface of the positive electrode active material at different scan rates, the oxidation peak current and the reduction peak current are obtained, a slope is obtained by fitting the oxidation peak current or the reduction peak current with the scan rate, and the active surface area of the positive electrode plate is calculated according to the Randles Sevick equation.

Specifically, the test method for the active surface area of the positive electrode is as follows: the positive electrode plate to be tested, the negative electrode plate and the electrolyte containing probe molecules are assembled into a button half-cell; in a room temperature environment, a Chenhua electrochemical workstation (model CHI660E) is used to test cyclic voltage-current curves of the button half-cell at different scan rates V in the range of 0.01 mV/s to 3.50 mV/s, and the scanning voltage range is 2.9 V to 3.5 V to obtain a series of oxidation peak currents $i_p$ (oxidation) and reduction peak currents $i_p$ (reduction); and the square root of the scan rate V is used as an X axis, and a series of oxidation peak currents $i_p$ are used as a Y axis for plotting to obtain a slope K. According to the Randles Sevick equation $i_p=2.69\times10^5\times n^{2/3}\times c\times D^{1/2}\times A\times V^{1/2}$, a slope $K=2.69\times10^5\times n^{2/3}\times c\times D^{1/2}\times A$ is obtained, where n is an electron transfer number related to the type of probe molecules, and n is 1 in this test method; D is a diffusion coefficient, and D is $2.1\times10^{-6}cm^2/s$ in this test method; A is an active surface area of the positive electrode plate; and c is the concentration of probe molecules in the electrolyte. The active surface area A of the positive electrode plate is calculated according to the above formula.

The electrolyte in the above test method is a common electrolyte. For example, ethylene carbonate (EC), ethyl methyl carbonate (EMC) and diethyl carbonate (DEC) may be mixed in a volume ratio of 1:1:1, and then, the fully dried lithium salt $LiPF_6$ is dissolved in a mixed organic solvent at a ratio of 1 mol/L.

The redox potential of the probe molecules in the above test method may be, for example, 2 V to 4 V. The concentration of the probe molecules may be, for example, 0.03 mol/L to 0.08 mol/L, and optionally, 0.05 mol/L.

In the above test method, the probe molecules include, but are not limited to, hexaammonium ruthenium, ferric chloride and ferrocene.

In some embodiments, the positive electrode active material may be a positive electrode active material for batteries well known in the art. As an example, the positive electrode active material may include at least one of the following materials: a lithium-containing phosphate with an olivine structure, a lithium transition metal oxide, and respective modified compounds thereof. However, the present application is not limited to these materials, and other conventional materials used as positive electrode active materials for batteries may also be used. These positive electrode active materials may be used alone, or two or more of these positive electrode active materials may be combined for use. Examples of lithium transition metal oxides may include, but are not limited to, at least one of a lithium-cobalt oxide (such as $LiCoO_2$), a lithium-nickel oxide (such as $LiNiO_2$), a lithium-manganese oxide (such as $LiMnO_2$ or $LiMn_2O_4$), a lithium-

nickel-cobalt oxide, a lithium-manganese-cobalt oxide, a lithium-nickel-manganese oxide, a lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), a lithium-nickel-cobalt-aluminum oxide (such as $LiNi_{0.85}Co_{0.15}Al_{0.05}O_2$), and modified compounds thereof. Examples of lithium-containing phosphates with an olivine structure may include, but are not limited to, at least one of lithium iron phosphate (such as $LiFePO_4$ (also abbreviated as LFP)), lithium iron phosphate and carbon composites, lithium manganese phosphate (such as $LiMnPO_4$), lithium manganese phosphate and carbon composites, lithium iron manganese phosphate, and lithium iron manganese phosphate and carbon composites.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder and any other component, for preparing the positive electrode plate in a solvent (such as N-methyl pyrrolidone) to form a positive electrode slurry; and coating the positive electrode slurry on the positive electrode current collector, and performing drying and cold pressing processes to obtain the positive electrode plate.

[Negative electrode plate]

The negative electrode plate includes a negative electrode current collector and a negative electrode film layer arranged on at least one surface of the negative electrode current collector, where the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil may be used as the metal foil. The composite current collector may include a high molecular material substrate layer and a metal layer formed on at least one surface of the high molecular material substrate. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the negative electrode active material may be a negative electrode active material for batteries well known in the art. As an example, the negative electrode active material may include at least one of the following materials: artificial graphite, natural graphite, soft carbon, hard carbon, silicon-based material, tin-based material, lithium titanate, etc. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials used as negative electrode active materials for batteries may also be used. These negative electrode active materials may be used alone, or two or more of these negative electrode active materials may be combined for use.

In some embodiments, the negative electrode film layer further optionally include a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain

the negative electrode plate.

[Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may include an outer package. The outer package may be used to encapsulate the above electrode assembly and the above electrolyte.

In some embodiments, the outer package of the secondary battery may be a hard case, such as a hard plastic case, an aluminum case, or a steel case. The outer package of the secondary battery may also be a soft package, such as a bag-type soft package. The material of the soft package may be a plastic, and examples of the plastic may include polypropylene, polybutylene terephthalate, polybutylene succinate, and the like.

The shape of the secondary battery is not particularly limited in the present application, and may be a cylinder, a square, or any other shape. For example, FIG. 1 shows a secondary battery 5 with a square structure as an example.

In some embodiments, referring to FIG. 2, the outer package may include a case 51 and a cover plate 53, where the case 51 may include a bottom plate and a side plate connected to the bottom plate, and the bottom plate and the side plate are enclosed to form an accommodating cavity. The case 51 has an opening in communication with the accommodating cavity, and the cover plate 53 may cover the opening to close the accommodating cavity. The positive electrode plate, the negative electrode plate and the separator may be formed into an electrode assembly 52 by a winding process or a stacking process. The electrode assembly 52 is encapsulated within the accommodating cavity. The electrolyte infiltrates the electrode assembly 52. The number of electrode assemblies 52 contained in the secondary battery 5 may be one or more, and may be selected by those skilled in the art according to specific actual needs.

In some embodiments, the secondary batteries may be assembled into a battery module, the number of secondary batteries contained in the battery module may be one or more, and the specific number may be selected by those skilled in the art according to the application and capacity of the battery module.

FIG. 3 shows a battery module 4 as an example. Referring to FIG. 3, in the battery module 4, a plurality of secondary batteries 5 may be sequentially arranged along a length direction of the battery module 4. Of course, any other arrangements are also possible. The plurality of secondary batteries 5 may further be fixed by fasteners.

Optionally, the battery module 4 may further include a shell having an accommodating space, and the plurality of secondary batteries 5 are accommodated in the accommodating space.

In some embodiments, the above battery modules may be further assembled into a battery pack, the number of battery modules contained in the battery pack may be one or more, and the specific number may be selected by those skilled in the art according to the application and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 may cover the lower box 3 to form an enclosed space for accommodating the battery modules 4. The plurality of battery modules 4 may be arranged in the battery box in any manner.

In addition, the present application further provides an electrical apparatus. The electrical apparatus includes at least one of the secondary battery, the battery module, or the battery pack provided in the present application. The secondary battery, the battery module, or the battery pack may be used as a power source for the electrical apparatus, and may also be used as an energy storage unit for the electrical apparatus. The electrical apparatus may include a mobile device (e.g., a mobile phone, a laptop, etc.), an electric vehicle (e.g., an all-electric vehicle, a hybrid electric vehicle, a plug-in hybrid electric vehicle, an electric bicycle, an electric scooter, an electric golf cart, an electric truck, etc.), an electric train, a ship and a satellite, an energy storage system, etc., but is not limited thereto.

For the electrical apparatus, the secondary battery, the battery module, or the battery pack may be selected according to its use requirements.

FIG. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

Examples

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

Example 1

1. Preparation of a positive electrode plate: A positive electrode active material lithium iron phosphate, a positive electrode lithium supplement $Li_2Cu_{0.6}Ni_{0.4}O_2$, a binder polyvinylidene fluoride (PVDF) and a conductive agent acetylene black were dissolved in solvent N-methylpyrrolidone (NMP) in a mass ratio of 95:2:2:1, sufficiently stirred and mixed uniformly to prepare a positive electrode slurry; and the positive electrode slurry was uniformly coated on a positive electrode current collector aluminum foil, and then dried, cold-pressed and slit to obtain the positive electrode plate.
2. Preparation of a negative electrode plate: A negative electrode active material artificial graphite, a conductive agent acetylene black, a binder styrene butadiene rubber (SBR) and a thickener sodium carboxymethyl cellulose (CMC-Na) were dissolved in deionized water in a mass ratio of 95:2:2:1, sufficiently stirred and mixed uniformly to prepare a negative electrode slurry; and the negative electrode slurry was coated on a negative electrode current collector copper foil, and then dried, cold-pressed and slit to obtain the negative electrode plate.
3. A polypropylene film was used as a separator.
4. Preparation of an electrolyte: Ethylene carbonate (EC), ethyl methyl carbonate (EMC) and diethyl carbonate (DEC) were mixed in a volume ratio of 1:1:1 in an argon atmosphere glove box ($H_2O$<0.1 ppm, $O_2$<0.1 ppm), then $LiPF_6$ was dissolved uniformly in the above solution, and a compound 1-1 was added to obtain the electrolyte. In the electrolyte, the concentration of $LiPF_6$ was 1 mol/L, and the mass proportion of the compound 1-1 in the electrolyte was 2%.
5. Preparation of a secondary battery: The positive electrode plate, the separator and the negative electrode plate were stacked sequentially so that the separator was positioned between the positive electrode plate and the negative electrode plate to play a role of separation, and then, they were wound to obtain an electrode assembly; and the electrode assembly was put into a battery case and dried, then injected with the electrolyte, and subsequently subjected to processes such as formation and standing to obtain the secondary battery.

**The preparation methods of secondary batteries in Examples 2-53 and Comparative Examples 1-2 were similar to that in Example 1, and different product parameters were detailed in Table 1.**

Preparation of a positive electrode lithium supplement $Li_2Cu_{0.6}Ni_{0.4}O_2$:

$Li_2O$, NiO and CuO powders were weighed and mixed uniformly by ball milling, and the molar ratio of Li, Ni and Cu elements in the mixed powder was 2.05:0.4:0.6. The mixed powder was heated to 680°C at a heating rate of 3°C/min in a nitrogen atmosphere, kept at this temperature for 10 h for sintering, and then cooled naturally. The sintered product was crushed and classified to obtain a classified product with a Dv50 particle size of 5 μm. The classified product was washed with anhydrous ethanol for 0.5 h and dried in a blasting oven at 160°C for 12 h.

Preparation of a positive electrode lithium supplement $Li_2CuO_2$:

Except that NiO was not added and the molar ratio of Li and Cu elements in the mixed powder was 2.05:1, the preparation method was the same as that of the positive electrode lithium supplement $Li_2Cu_{0.6}Ni_{0.4}O_2$.

Preparation of a positive electrode lithium supplement $Li_2NiO_2$:

A nickel-based precursor $Ni(OH)_2$ was obtained by a co-precipitation method. The precursor $Ni(OH)_2$ and lithium oxide $Li_2O$ (purity>97%, Aldrich) were mixed by ball milling at a molar ratio of Li/Ni=3:1 for 5 h at a ball milling speed of 500 rpm to obtain a mixed powder. The mixed powder was sintered in a nitrogen atmosphere at 250°C for 2 h and 450°C for 2 h, and then heated to 700°C at a heating rate of 1°C/min and sintered for 10 h.

Preparation of a positive electrode lithium supplement $Li_5FeO_4$:

Lithium oxide (purity>97%, Aldrich) and iron oxide (purity>99%, Aldrich) were mixed uniformly at a molar ratio of Li/Fe elements of 5:1, pretreated at 450°C for 8 h in an argon atmosphere, ground uniformly, then heated to 750°C at a rate of 5°C/min, sintered at this temperature for 18 h, and naturally cooled to the room temperature.

Preparation of a positive electrode lithium supplement $Li_6CoO_4$:

In a drying room, lithium oxide (purity>97%, Aldrich) and cobalt oxide (purity>99%, Aldrich) were mixed at a molar ratio of Li/Co elements of 6:1 for ball milling for 12 h, calcined at 700°C for 12 h in an argon atmosphere, and naturally cooled to the room temperature.

Table 1: Parameter results of Examples 1-53 and Comparative Examples 1-2

| | Electrolyte additive | | Positive electrode lithium supplement | | Ratio of Dv50 particle size of positive electrode lithium supplement to Dv50 particle size of positive electrode active material | Active specific surface area of positive electrode plate ($m^2/g$) | $W_1/W_2$ |
|---|---|---|---|---|---|---|---|
| | Compound | Mass proportion $W_1$(%) in electrolyte | Compound | Mass proportion $W_2$(%) in positive electrode film layer | | | |
| Example 1 | Compound 1-1 | 2 | $Li_2Cu_{0.6}Ni_{0.4}O_2$ | 2 | 4.28 | 8 | 1 |
| Example 2 | Compound 1-2 | 2 | $Li_2Cu_{0.6}Ni_{0.4}O_2$ | 2 | 4.28 | 8 | 1 |
| Example 3 | Compound 1-3 | 2 | $Li_2Cu_{0.6}Ni_{0.4}O_2$ | 2 | 4.28 | 8 | 1 |
| Example 4 | Compound 1-4 | 2 | $Li_2Cu_{0.6}Ni_{0.4}O_2$ | 2 | 4.28 | 8 | 1 |
| Example 5 | Compound 1-5 | 2 | $Li_2Cu_{0.6}Ni_{0.4}O_2$ | 2 | 4.28 | 8 | 1 |
| Example 6 | Compound 1-6 | 2 | $Li_2Cu_{0.6}Ni_{0.4}O_2$ | 2 | 4.28 | 8 | 1 |
| Example 7 | Compound 1-7 | 2 | $Li_2Cu_{0.6}Ni_{0.4}O_2$ | 2 | 4.28 | 8 | 1 |
| Example 8 | Compound 1-8 | 2 | $Li_2Cu_{0.6}Ni_{0.4}O_2$ | 2 | 4.28 | 8 | 1 |
| Example 9 | Compound 2-1 | 2 | $Li_2Cu_{0.6}Ni_{0.4}O_2$ | 2 | 4.28 | 8 | 1 |
| Example 10 | Compound 2-2 | 2 | $Li_2Cu_{0.6}Ni_{0.4}O_2$ | 2 | 4.28 | 8 | 1 |
| Example 11 | Compound 2-3 | 2 | $Li_2Cu_{0.6}Ni_{0.4}O_2$ | 2 | 4.28 | 8 | 1 |
| Example 12 | Compound 2-4 | 2 | $Li_2Cu_{0.6}Ni_{0.4}O_2$ | 2 | 4.28 | 8 | 1 |
| Example 13 | Compound 2-5 | 2 | $Li_2Cu_{0.6}Ni_{0.4}O_2$ | 2 | 4.28 | 8 | 1 |

(continued)

| | Electrolyte additive | | Positive electrode lithium supplement | | Ratio of Dv50 particle size of positive electrode lithium supplement to Dv50 particle size of positive electrode active material | Active specific surface area of positive electrode plate ($m^2/g$) | $W_1/W_2$ |
|---|---|---|---|---|---|---|---|
| | Compound | Mass proportion $W_1$(%) in electrolyte | Compound | Mass proportion $W_2$(%) in positive electrode film layer | | | |
| Example 14 | Compound 2-6 | 2 | $Li_2Cu_{0.6}Ni_{0.4}O_2$ | 2 | 4.28 | 8 | 1 |
| Example 15 | Compound 2-7 | 2 | $Li_2Cu_{0.6}Ni_{0.4}O_2$ | 2 | 4.28 | 8 | 1 |
| Example 16 | Compound 2-8 | 2 | $Li_2Cu_{0.6}Ni_{0.4}O_2$ | 2 | 4.28 | 8 | 1 |
| Example 17 | Compound 2-9 | 2 | $Li_2Cu_{0.6}Ni_{0.4}O_2$ | 2 | 4.28 | 8 | 1 |
| Example 18 | Compound 3-1 | 2 | $Li_2Cu_{0.6}Ni_{0.4}O_2$ | 2 | 4.28 | 8 | 1 |
| Example 19 | Compound 3-2 | 2 | $Li_2Cu_{0.6}Ni_{0.4}O_2$ | 2 | 4.28 | 8 | 1 |
| Example 20 | Compound 3-3 | 2 | $Li_2Cu_{0.6}Ni_{0.4}O_2$ | 2 | 4.28 | 8 | 1 |
| Example 21 | Compound 3-4 | 2 | $Li_2Cu_{0.6}Ni_{0.4}O_2$ | 2 | 4.28 | 8 | 1 |
| Example 22 | Compound 3-5 | 2 | $Li_2Cu_{0.6}Ni_{0.4}O_2$ | 2 | 4.28 | 8 | 1 |
| Example 23 | Compound 3-6 | 2 | $Li_2Cu_{0.6}Ni_{0.4}O_2$ | 2 | 4.28 | 8 | 1 |
| Example 24 | Compound 1-2 | 2 | $Li_2Cu_{0.6}Ni_{0.4}O_2$ | 0.1 | 4.28 | 8 | 20 |
| Example 25 | Compound 1-2 | 2 | $Li_2Cu_{0.6}Ni_{0.4}O_2$ | 1 | 4.28 | 8 | 2 |
| Example 26 | Compound 1-2 | 2 | $Li_2Cu_{0.6}Ni_{0.4}O_2$ | 5 | 4.28 | 8 | 0.4 |
| Example 27 | Compound 1-2 | 2 | $Li_2Cu_{0.6}Ni_{0.4}O_2$ | 8 | 4.28 | 8 | 0.25 |
| Example 28 | Compound 1-2 | 2 | $Li_2Cu_{0.6}Ni_{0.4}O_2$ | 10 | 4.28 | 8 | 0.2 |
| Example 29 | Compound 1-2 | 0.5 | $Li_2Cu_{0.6}Ni_{0.4}O_2$ | 2 | 4.28 | 8 | 0.25 |
| Example 30 | Compound 1-2 | 1 | $Li_2Cu_{0.6}Ni_{0.4}O_2$ | 2 | 4.28 | 8 | 0.5 |
| Example 31 | Compound 1-2 | 5 | $Li_2Cu_{0.6}Ni_{0.4}O_2$ | 2 | 4.28 | 8 | 2.5 |

(continued)

| | Electrolyte additive | | Positive electrode lithium supplement | | Ratio of Dv50 particle size of positive electrode lithium supplement to Dv50 particle size of positive electrode active material | Active specific surface area of positive electrode plate ($m^2/g$) | $W_1/W_2$ |
|---|---|---|---|---|---|---|---|
| | Compound | Mass proportion $W_1$(%) in electrolyte | Compound | Mass proportion $W_2$(%) in positive electrode film layer | | | |
| Example 32 | Compound 1-2 | 10 | $Li_2Cu_{0.6}Ni_{0.4}O_2$ | 2 | 4.28 | 8 | 5 |
| Example 33 | Compound 1-2 | 2 | $Li_2NiO_2$ | 2 | 4.28 | 8 | 1 |
| Example 34 | Compound 1-2 | 2 | $Li_2CuO_2$ | 2 | 4.28 | 8 | 1 |
| Example 35 | Compound 1-2 | 2 | $Li_5FeO_4$ | 1.5 | 4.28 | 8 | 1.333333333 |
| Example 36 | Compound 1-2 | 2 | $Li_6CoO_4$ | 1 | 4.28 | 8 | 2 |
| Example 37 | Compound 1-2 | 0.01 | $Li_2Cu_{0.6}Ni_{0.4}O_2$ | 2 | 4.28 | 8 | 0.005 |
| Example 38 | Compound 1-2 | 20 | $Li_2Cu_{0.6}Ni_{0.4}O_2$ | 2 | 4.28 | 8 | 10 |
| Example 39 | Compound 1-2 | 0.1 | $Li_2Cu_{0.6}Ni_{0.4}O_2$ | 2 | 4.28 | 8 | 0.05 |
| Example 40 | Compound 1-2 | 0.005 | $Li_2Cu_{0.6}Ni_{0.4}O_2$ | 2 | 4.28 | 8 | 0.0025 |
| Example 41 | Compound 1-2 | 25 | $Li_2Cu_{0.6}Ni_{0.4}O_2$ | 2 | 4.28 | 8 | 12.5 |
| Example 42 | Compound 1-2 | 2 | $Li_2Cu_{0.6}Ni_{0.4}O_2$ | 0.05 | 4.28 | 8 | 40 |
| Example 43 | Compound 1-2 | 2 | $Li_2Cu_{0.6}Ni_{0.4}O_2$ | 15 | 4.28 | 8 | 0.133333333 |
| Example 44 | Compound 1-2 | 2 | $Li_2Cu_{0.6}Ni_{0.4}O_2$ | 2 | 1 | 8 | 1 |
| Example 45 | Compound 1-2 | 2 | $Li_2Cu_{0.6}Ni_{0.4}O_2$ | 2 | 6 | 8 | 1 |
| Example 46 | Compound 1-2 | 2 | $Li_2Cu_{0.6}Ni_{0.4}O_2$ | 2 | 10 | 8 | 1 |
| Example 47 | Compound 1-2 | 2 | $Li_2Cu_{0.6}Ni_{0.4}O_2$ | 2 | 0.05 | 8 | 1 |
| Example 48 | Compound 1-2 | 2 | $Li_2Cu_{0.6}Ni_{0.4}O_2$ | 2 | 15 | 8 | 1 |
| Example 49 | Compound 1-2 | 2 | $Li_2Cu_{0.6}Ni_{0.4}O_2$ | 2 | 4.28 | 0.5 | 1 |

(continued)

| | Electrolyte additive | | Positive electrode lithium supplement | | Ratio of Dv50 particle size of positive electrode lithium supplement to Dv50 particle size of positive electrode active material | Active specific surface area of positive electrode plate ($m^2/g$) | $W_1/W_2$ |
|---|---|---|---|---|---|---|---|
| | Compound | Mass proportion $W_1$(%) in electrolyte | Compound | Mass proportion $W_2$(%) in positive electrode film layer | | | |
| Example 50 | Compound 1-2 | 2 | $Li_2Cu_{0.6}Ni_{0.4}O_2$ | 2 | 4.28 | 20 | 1 |
| Example 51 | Compound 1-2 | 2 | $Li_2Cu_{0.6}Ni_{0.4}O_2$ | 2 | 4.28 | 6 | 1 |
| Example 52 | Compound 1-2 | 2 | $Li_2Cu_{0.6}Ni_{0.4}O_2$ | 2 | 4.28 | 0.3 | 1 |
| Example 53 | Compound 1-2 | 2 | $Li_2Cu_{0.6}Ni_{0.4}O_2$ | 2 | 4.28 | 25 | 1 |
| Comparative Example 1 | / | / | $Li_2Cu_{0.6}Ni_{0.4}O_2$ | 2 | 4.28 | 8 | / |
| Comparative Example 2 | Vinylene carbonate | 2 | $Li_2Cu_{0.6}Ni_{0.4}O_2$ | 2 | 4.28 | 8 | / |

**Test case**

(1) Test of Dv50 particle size:

According to GB/T 19077-2016 "Particle Size Distribution Laser Diffraction Method", the Mastersizer 2000E laser particle size analyzer produced by Malvern Instruments Ltd., UK, was used for determination.

(2) Test of active specific surface area of positive electrode plate:

① Materials and reagents:

A negative electrode plate was a metal lithium plate with a thickness of 0.4 mm.

Preparation of an electrolyte: Ethylene carbonate (EC), ethyl methyl carbonate (EMC) and diethyl carbonate (DEC) were mixed in a volume ratio of 1:1:1, and then, fully dried $LiPF_6$ and probe molecule ferrocene were dissolved in a mixed organic solvent to obtain an electrolyte with a $LiPF_6$ concentration of 1 mol/L and a probe molecule concentration c of 0.05 mol/L; and the redox potential of the probe molecule was 2V to 4V.

② Test method:

The positive electrode plate to be tested, the above negative electrode plate and the electrolyte were assembled into a button half-cell; in a room temperature environment, a Chenhua electrochemical workstation (model CHI660E) was used to test cyclic voltage-current curves of the button half-cell at different scan rates V in the range of 0.01 mV/s to 3.50 mV/s, and the scanning voltage range was 2.9 V to 3.5 V to obtain a series of oxidation peak currents $i_p$ (oxidation) and reduction peak currents $i_p$ (reduction); and the square root of the scan rate V was used as an X axis, and a series of oxidation peak currents $i_p$ were used as a Y axis for plotting to obtain a slope K. According to the Randles Sevick equation $i_p=2.69\times10^5\times n^{2/3}\times c\times D^{1/2}\times A\times V^{1/2}$, a slope $K=2.69\times10^5\times n^{2/3}\times c\times D^{1/2}\times A$ was obtained, where n was an electron transfer number related to the type of probe molecules, and n was 1 in this test method; D was a diffusion coefficient, and D

was $2.1\times10^{-6}cm^2/s$ in this test method; A was an active surface area of the positive electrode plate; and c was the concentration of probe molecules in the electrolyte. The active surface area A of the positive electrode plate was calculated according to the above formula, and then, the active surface area A of the positive electrode plate was divided by the weight m of the positive electrode plate to obtain the active specific surface area of the positive electrode plate.

(3) Test of gram capacity of battery

At 25°C, the battery was charged at a constant current of 0.33 C to 3.65 V, and then charged at a constant voltage of 3.65 V until the current was less than 0.05 C. Then, the lithium-ion battery was discharged at a constant current of 0.33 C to 2.5 V. The discharge capacity was recorded as C0 (mAh). The gram capacity of the battery was C0/W3 (mAh/g), where W3 was the total mass (g) of the positive electrode active material and the positive electrode lithium supplement.

(4) Test of cycling performance of battery at 45°C:

At 45°C, the battery was charged at a constant current of 1 C to a voltage of 3.65 V, then charged at a constant voltage of 3.65 V until the current≤0.05 C, and then discharged at a constant current of 1 C to a voltage of 2.5 V. This was one charge and discharge process. The discharge capacity at this time was recorded as the discharge capacity of the battery at the first cycle. Charge and discharge cycles were repeated in this way, the cycle capacity retention rate of the battery was calculated according to the following formula, and the number of cycles corresponding to when the cycle capacity retention rate reaches 80% was recorded.

The cycle capacity retention rate (%) of the battery = (the discharge capacity of the battery at the Nth cycle/the discharge capacity of the battery at the first cycle) × 100%.

(5) Test of anode EIS impedance growth rate after battery was cycled for 50 cycles at 45°C:

Before a cycle test, the battery was charged to 50% SOC and then disassembled to remove the negative electrode plate and assemble a button half-cell of negative electrode | electrolyte | lithium plate. The button half-cell was placed in an electrochemical workstation, an impedance curve was tested by an EIS impedance tester, and the anode interface SEI film impedance $R_0$ was calculated by an equivalent circuit fitting method. The test frequency range was 0.01-10 kHz, and the disturbance voltage was set to 10 mV.

At 45°C, the lithium-ion battery was charged at a constant current of 1 C to a voltage of 3.65 V and then charged at a constant voltage of 3.65 V to a current≤0.05 C, and then, the battery was discharged at a constant current of 1 C to a voltage of 2.5 V. This was one charge and discharge process. The lithium-ion battery was charged and discharged for 50 cycles according to this cycle process, then the negative electrode plate was disassembled still according to the above method, and the anode interface SEI film impedance Rt after 50 cycles was tested. The impedance growth rate was calculated according to the following formula.

$$\text{Impedance growth rate (\%)} = 100\% \times (Rt - R_0)/R_0$$

Table 2: Performance test results of Examples 1-53 and Comparative Examples 1-2

| | Gram capacity (mAh/g) | Cycling performance (number of cycles at 45°C when the cycle capacity retention rate reaches 80%) | Anode EIS impedance growth rate (%) at 45°C after 50 cycles |
|---|---|---|---|
| Example 1 | 148.58 | 1331 | 5.2 |
| Example 2 | 148.8 | 1375 | 4.1 |
| Example 3 | 147.9 | 1309 | 5.64 |
| Example 4 | 147.6 | 1287 | 6.12 |
| Example 5 | 147.4 | 1278 | 6.36 |
| Example 6 | 147.8 | 1312 | 5.6 |
| Example 7 | 147.3 | 1267 | 6.77 |
| Example 8 | 147.1 | 1256 | 6.91 |

(continued)

| | Gram capacity (mAh/g) | Cycling performance (number of cycles at 45°C when the cycle capacity retention rate reaches 80%) | Anode EIS impedance growth rate (%) at 45°C after 50 cycles |
|---|---|---|---|
| Example 9 | 148.5 | 1301 | 5.68 |
| Example 10 | 147.9 | 1257 | 6.87 |
| Example 11 | 148.1 | 1298 | 5.91 |
| Example 12 | 148 | 1276 | 6.25 |
| Example 13 | 147.8 | 1246 | 7.23 |
| Example 14 | 147.5 | 1238 | 7.52 |
| Example 15 | 147.3 | 1221 | 7.65 |
| Example 16 | 147.2 | 1207 | 7.71 |
| Example 17 | 148.3 | 1311 | 5.62 |
| Example 18 | 148.5 | 1318 | 5.57 |
| Example 19 | 148.1 | 1305 | 5.63 |
| Example 20 | 148.2 | 1321 | 5.31 |
| Example 21 | 147.7 | 1204 | 7.78 |
| Example 22 | 147.2 | 1121 | 8.53 |
| Example 23 | 146.4 | 1457 | 5.26 |
| Example 24 | 146.6 | 1189 | 3.69 |
| Example 25 | 147.5 | 1251 | 3.84 |
| Example 26 | 149.1 | 1285 | 6.7 |
| Example 27 | 149.3 | 1276 | 10.8 |
| Example 28 | 149.7 | 1236 | 15.1 |
| Example 29 | 148.1 | 1244 | 4.78 |
| Example 30 | 148.4 | 1311 | 4.35 |
| Example 31 | 148.6 | 1319 | 4.55 |
| Example 32 | 148.3 | 1271 | 5.25 |
| Example 33 | 148.4 | 1341 | 5.11 |
| Example 34 | 148.5 | 1275 | 6.34 |
| Example 35 | 148.8 | 1371 | 4.12 |
| Example 36 | 148.7 | 1321 | 5.7 |
| Example 37 | 147.9 | 1243 | 5.5 |
| Example 38 | 147.3 | 1201 | 7.81 |
| Example 39 | 148.3 | 1201 | 5.9 |
| Example 40 | 146.9 | 1121 | 8.9 |
| Example 41 | 146.1 | 1151 | 9.17 |
| Example 42 | 144.8 | 1151 | 3.51 |
| Example 43 | 149.8 | 1001 | 20.7 |
| Example 44 | 147.5 | 1305 | 4.9 |
| Example 45 | 148.6 | 1361 | 4.5 |
| Example 46 | 148.1 | 1279 | 5.1 |

(continued)

| | Gram capacity (mAh/g) | Cycling performance (number of cycles at 45°C when the cycle capacity retention rate reaches 80%) | Anode EIS impedance growth rate (%) at 45°C after 50 cycles |
|---|---|---|---|
| Example 47 | 146.1 | 1254 | 5.7 |
| Example 48 | 147.1 | 1231 | 5.6 |
| Example 49 | 146.3 | 1157 | 5.9 |
| Example 50 | 147.8 | 1231 | 7.5 |
| Example 51 | 148.6 | 1355 | 4.3 |
| Example 52 | 145.9 | 1041 | 6.8 |
| Example 53 | 145.5 | 1141 | 8.1 |
| Comparative Example 1 | 141.5 | 821 | 11.7 |
| Comparative Example 2 | 142.4 | 971 | 10.5 |

From Table 2, it can be seen that:
Compared with Comparative Examples 1-2, the interface impedance growth rate of the negative electrode of the battery of the present application is significantly reduced, the battery capacity is significantly improved, and the cycle life of the battery is significantly prolonged.

Compared with Examples 40-41, the interface impedance growth rate of the negative electrode of the battery of Examples 2, 29-32 and 37-39 of the present application is significantly lower, the battery capacity is significantly higher, and the cycle life of the battery is significantly longer.

Compared with Example 42, the battery capacity of Examples 2 and 24-28 of the present application is significantly higher, and the cycle life of the battery is significantly longer. Compared with Example 43, the interface impedance growth rate of the negative electrode of the battery of Examples 2 and 24-28 of the present application is significantly reduced, and the cycle life of the battery is significantly longer.

Compared with Examples 52-53, the battery capacity of Examples 2 and 49-51 of the present application is significantly higher, and the cycle life of the battery is significantly longer.

It should be noted that the present application is not limited to the above embodiments. The above embodiments are merely illustrative, and embodiments having substantively the same composition as the technical idea and exerting the same effects within the scope of the technical solution of the present application are all included in the technical scope of the present application. **In** addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. Use of a compound shown in Formula I as an electrolyte additive,

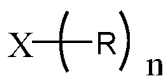

I,

wherein

X is selected from

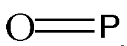

,

Si and B;
n is selected from 3 and 4; and
n R groups are independently selected from hydroxyl, C1-C6 alkoxy, C2-C6 alkynyl, C2-C10 alkenyloxy and C2-C10 alkynyloxy, and at least one of the n R groups comprises an unsaturated bond.

**2.** The use according to claim 1, wherein n R groups are independently selected from hydroxyl, C1-C6 alkoxy, C2-C6 alkynyl,

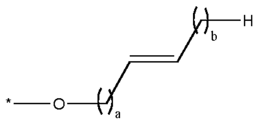 and 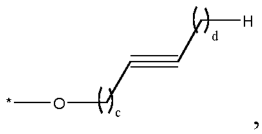 ,

and at least one of the n R groups comprises an unsaturated bond; and
a, b, c and d are independently selected from 0, 1, 2, 3 and 4.

**3.** The use according to claim 1 or 2, wherein n R groups are independently selected from hydroxyl, methoxy, ethoxy, ethynyl, propargyl, vinyloxy, allyloxy, propenyloxy, ethynyloxy, propynyloxy and propargyloxy, and at least one of the n R groups comprises an unsaturated bond.

**4.** The use according to claim 1, wherein the compound is a compound shown in Formula II,

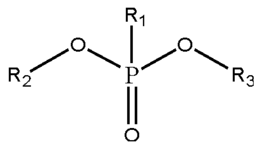

II,

wherein

$R_1$ is selected from hydroxyl, C1-C6 alkoxy, C2-C6 alkynyl, C2-C10 alkenyloxy and C2-C10 alkynyloxy;
$R_2$ and $R_3$ are independently selected from H, C1-C6 alkyl, C2-C10 alkenyl and C2-C10 alkynyl;
and at least one group of $R_1$, $R_2$ and $R_3$ comprises an unsaturated bond.

**5.** The use according to claim 4, wherein $R_1$ is selected from hydroxyl, C1-C6 alkoxy, C2-C6 alkynyl,

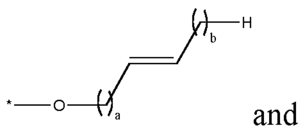 and 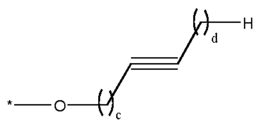 ;

$R_2$ and $R_3$ are independently selected from H, C1-C6 alkyl,

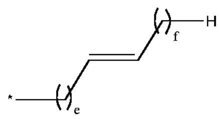 and 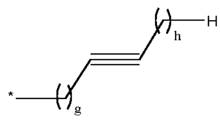 ;

a, b, c, d, e, f, g and h are independently selected from 0, 1, 2, 3 and 4; at least one group of $R_1$, $R_2$ and $R_3$ comprises an unsaturated bond;
optionally, $R_1$ is selected from hydroxyl, methoxy, ethoxy, ethynyl, propargyl, vinyloxy, allyloxy, propenyloxy, ethynyloxy, propynyloxy and propargyloxy; $R_2$ and $R_3$ are independently selected from H, methyl, ethyl, vinyl, allyl, propenyl, ethynyl, propynyl and propargyl; and at least one group of $R_1$, $R_2$ and $R_3$ comprises an unsaturated bond.

**6.** The use according to claim 1, wherein the compound is a compound shown in Formula III,

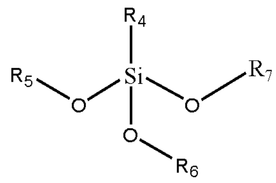

III,

wherein

$R_4$ is selected from hydroxyl, C1-C6 alkoxy, C2-C6 alkynyl, C2-C10 alkenyloxy and C2-C10 alkynyloxy;
$R_5$, $R_6$ and $R_7$ are independently selected from H, C1-C6 alkyl, C2-C10 alkenyl and C2-C10 alkynyl;
and at least one group of $R_4$, $R_5$, $R_6$ and $R_7$ comprises an unsaturated bond.

**7.** The use according to claim 6, wherein $R_4$ is selected from hydroxyl, C1-C6 alkoxy, C2-C6 alkynyl,

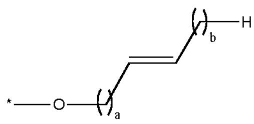 and 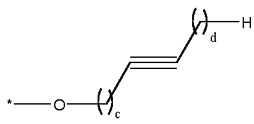 ;

$R_5$, $R_6$ and $R_7$ are independently selected from H, C1-C6 alkyl,

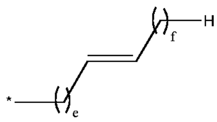 and 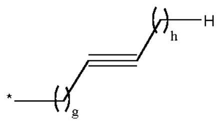

; a, b, c, d, e, f, g and h are independently selected from 0, 1, 2, 3 and 4; at least one group of $R_4$, $R_5$, $R_6$ and $R_7$ comprises an unsaturated bond;
optionally, $R_4$ is selected from hydroxyl, methoxy, ethoxy, ethynyl, propargyl, vinyloxy, allyloxy, propenyloxy, ethynyloxy, propynyloxy and propargyloxy; $R_5$, $R_6$ and $R_7$ are independently selected from H, methyl, ethyl, vinyl, allyl, propenyl, ethynyl, propynyl and propargyl; and at least one group of $R_4$, $R_5$, $R_6$ and $R_7$ comprises an unsaturated bond.

**8.** The use according to claim 1, wherein the compound is a compound shown in Formula IV,

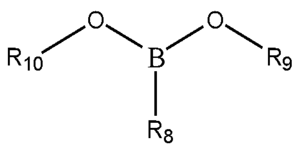

IV,

wherein

$R_8$ is selected from hydroxyl, C1-C6 alkoxy, C2-C6 alkynyl, C2-C10 alkenyloxy and C2-C10 alkynyloxy;
$R_9$ and $R_{10}$ are independently selected from H, C1-C6 alkyl, C2-C10 alkenyl and C2-C10 alkynyl;
and at least one group of $R_8$, $R_9$ and $R_{10}$ comprises an unsaturated bond.

**9.** The use according to claim 8, wherein $R_8$ is selected from hydroxyl, C1-C6 alkoxy, C2-C6 alkynyl,

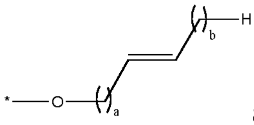 and 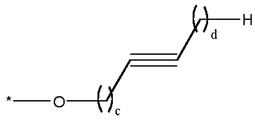 ;

$R_9$ and $R_{10}$ are independently selected from H, C1-C6 alkyl,

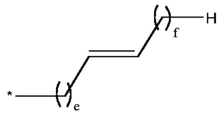 and 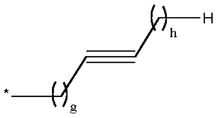 ;

a, b, c, d, e, f, g and h are independently selected from 0, 1, 2, 3 and 4; at least one group of $R_8$, $R_9$ and $R_{10}$ comprises an unsaturated bond;
optionally, $R_8$ is selected from hydroxyl, methoxy, ethoxy, ethynyl, propargyl, vinyloxy, allyloxy, propenyloxy, ethynyloxy, propynyloxy and propargyloxy; $R_9$ and $R_{10}$ are independently selected from H, methyl, ethyl, vinyl, allyl, propenyl, ethynyl, propynyl and propargyl; and at least one group of $R_8$, $R_9$ and $R_{10}$ comprises an unsaturated bond.

**10.** The use according to any one of claims 1 to 9, wherein the compound is selected from:

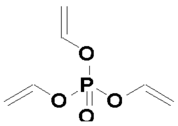, 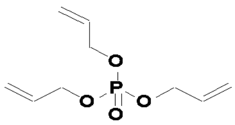, 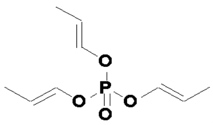, 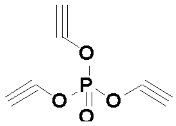, 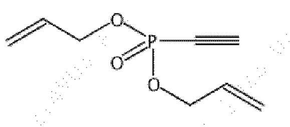,

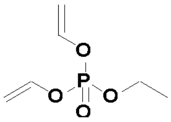, 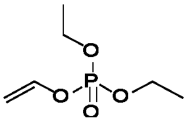, 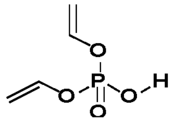, 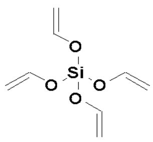, 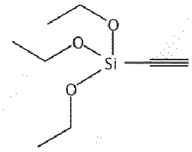, 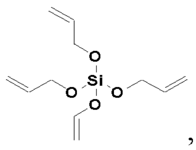,

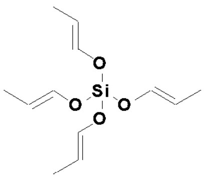, 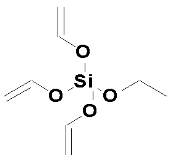, 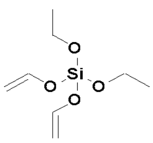, 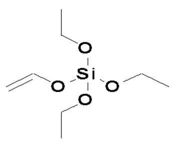, 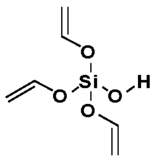, 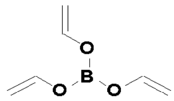,

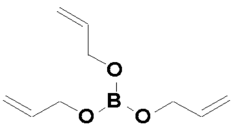, 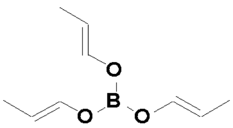, 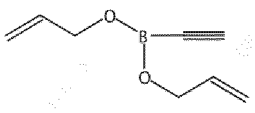, 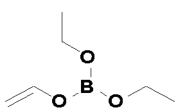

and

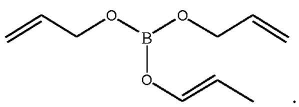.

**11.** An electrolyte, comprising an electrolyte additive, wherein the electrolyte additive comprises the compound according to any one of claims 1 to 10.

**12.** The electrolyte according to claim 11, wherein the mass proportion of the electrolyte additive in the electrolyte is 0.005%-25%, optionally 0.01%-20%, more optionally 0.1%-10%, and further optionally 2%-5%.

**13.** A battery, comprising an electrolyte additive or the electrolyte according to claim 11 or 12, wherein the electrolyte additive comprises the compound according to any one of claims 1 to 10.

**14.** The battery according to claim 13, further comprising a positive electrode plate, the positive electrode plate comprising a positive electrode current collector and a positive electrode film layer arranged on at least one surface of the positive electrode current collector, and the positive electrode film layer comprising a positive electrode lithium supplement $Li_eMO_g$, wherein

M comprises one or more elements of Ni, Co, Fe, Mn, Zn, Mg, Ca, Cu, Sn, Mo, Ru, Ir, V, Nb and Cr;
$2 \leq e \leq 6$, optionally, e is 2, 3, 4, 5 or 6; and
$2 \leq g \leq 4$, optionally, g is 2, 3 or 4.

**15.** The battery according to claim 14, wherein the positive electrode lithium supplement comprises one or more of $Li_2M1O_2$, $Li_2M2O_3$, $Li_3M3O_4$, $Li_5M4O_4$ and $Li_6M5O_4$, wherein M1 comprises one or more elements of Ni, Co, Fe, Mn, Zn, Mg, Ca and Cu, M2 comprises one or more elements of Mn, Sn, Mo, Ru and Ir, M3 comprises one or more elements of V, Nb, Cr and Mo, M4 comprises one or more elements of Fe, Cr, V and Mo, and M5 comprises one or more elements of Co, V, Cr and Mo.

**16.** The battery according to claim 14 or 15, wherein in the positive electrode lithium supplement, the valence state of at least one metal element other than lithium is lower than its own highest oxidation valence state.

**17.** The battery according to any one of claims 14 to 16, wherein the positive electrode lithium supplement is selected from one or more of $Li_6CoO_4$, $Li_5FeO_4$, $Li_3VO_4$, $Li_2MoO_3$, $Li_2RuO_3$, $Li_2MnO_3$, $Li_2MnO_2$, $Li_2NiO_2$, $Li_2CuO_2$ and $Li_2Cu_kNi_{1-p}M_pO_2$; and
optionally, in the $Li_2Cu_kNi_{1-p}M_pO_2$, $0<k<1$, $0 \leq p<0.1$.

**18.** The battery according to any one of claims 14 to 17, wherein the mass proportion of the positive electrode lithium supplement in the positive electrode film layer is 0.05%-15%, optionally 0.1%-10%, more optionally 1%-8%, and further optionally 1%-5%.

**19.** The battery according to any one of claims 14 to 18, wherein the ratio of the mass proportion of the electrolyte additive in the electrolyte to the mass proportion of the positive electrode lithium supplement in the positive electrode film layer is 0.00033-500, optionally 0.0025-40, and more optionally 0.04-5.

**20.** The battery according to any one of claims 14 to 19, wherein the positive electrode film layer further comprises a positive electrode active material, and the ratio of the Dv50 particle size of the positive electrode lithium supplement to the Dv50 particle size of the positive electrode active material is 0.05-15, optionally 1-10, and more optionally 2-8.

**21.** The battery according to any one of claims 14 to 20, wherein the active specific surface area of the positive electrode plate is greater than 0 $cm^2/g$ and less than or equal to 25 $cm^2/g$, optionally greater than 0 $cm^2/g$ and less than or equal to 20 $cm^2/g$, more optionally greater than or equal to 0.5 $cm^2/g$ and less than or equal to 20 $cm^2/g$, and further optionally greater than or equal to 2 $cm^2/g$ and less than or equal to 10 $cm^2/g$.

**22.** An electrical apparatus, comprising the battery according to any one of claims 13 to 21.

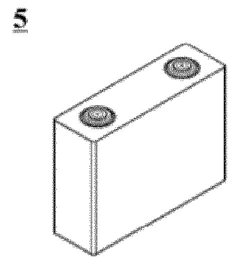


FIG. 1

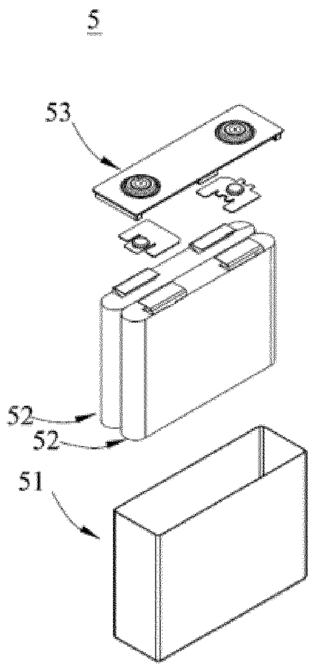


FIG. 2

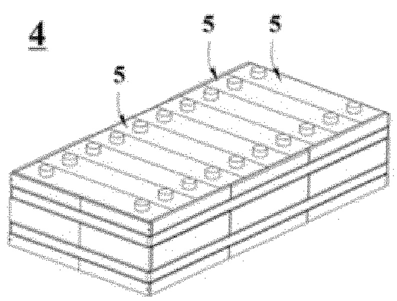


FIG. 3

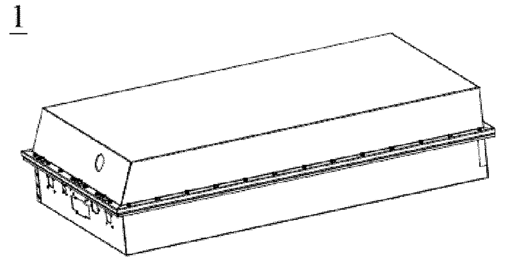


FIG. 4

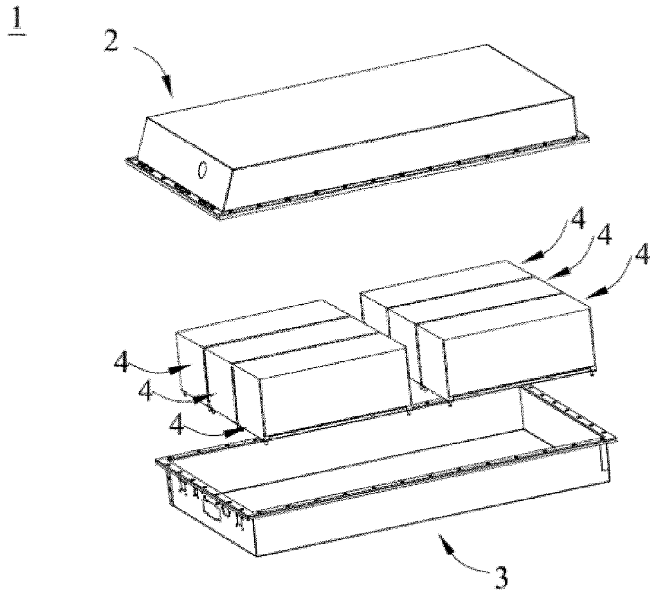


FIG. 5

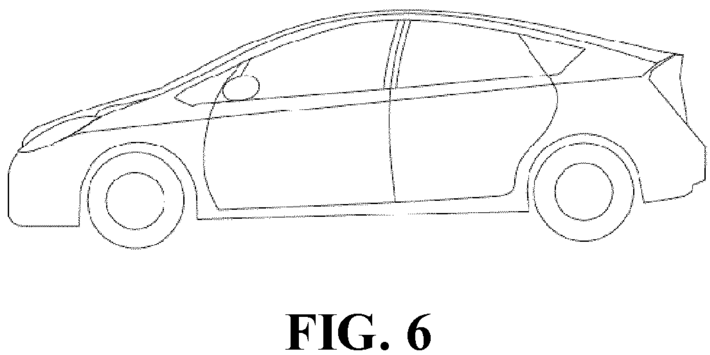

FIG. 6

## INTERNATIONAL SEARCH REPORT

International application No.
**PCT/CN2023/083749**

**A. CLASSIFICATION OF SUBJECT MATTER**

H01M10/0567(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 电解液, 电解质, 添加剂, 磷酸化合物, 磷酸5d酯, 硅酸5d酯, 硅烷, 硼酸5d酯, 硼酸化合物, 烯基, 炔基, 烷氧基, 不饱和, 捕获, 捕捉, 产气, 胀气, 气体, 界面, 补锂, 锂补充, electrolyte, additives, phosphoric, esters, silicic, silanes, boric, compounds, alkenyl, alkynyl, alkoxy, group?, unsaturation, trap+, gas, generat+, expand+, interface, lithium 3d supplementat+

**C. DOCUMENTS CONSIDERED TO BE RELEVANT**

| Category* | Citation of document, with indication, where appropriate, of the relevant passages | Relevant to claim No. |
|---|---|---|
| X | CN 112635822 A (NINGDE CONTEMPORARY AMPEREX TECHNOLOGY CO., LTD.) 09 April 2021 (2021-04-09)<br>description, paragraphs 2 and 13-74 | 1-5, 10-13, 22 |
| Y | CN 112635822 A (NINGDE CONTEMPORARY AMPEREX TECHNOLOGY CO., LTD.) 09 April 2021 (2021-04-09)<br>description, paragraphs 2 and 13-74 | 14-21 |
| X | CN 103367804 A (SHENZHEN CAPCHEM TECHNOLOGY CO., LTD.) 23 October 2013 (2013-10-23)<br>description, paragraphs 2 and 7-40 | 1-3, 6-7, 10-13, 22 |
| Y | CN 103367804 A (SHENZHEN CAPCHEM TECHNOLOGY CO., LTD.) 23 October 2013 (2013-10-23)<br>description, paragraphs 2 and 7-40 | 14-21, |
| X | JP 2003317800 A (MITSUI CHEMICALS INC.) 07 November 2003 (2003-11-07)<br>description, paragraphs 2 and 11-63 | 1-3, 8-13, 22 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 November 2023** | **23 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2023/083749**

**C. DOCUMENTS CONSIDERED TO BE RELEVANT**

| Category* | Citation of document, with indication, where appropriate, of the relevant passages | Relevant to claim No. |
|---|---|---|
| Y | JP 2003317800 A (MITSUI CHEMICALS INC.) 07 November 2003 (2003-11-07)<br>description, paragraphs 2 and 11-63 | 14-21 |
| Y | CN 108232343 A (CENTRAL SOUTH UNIVERSITY) 29 June 2018 (2018-06-29)<br>description, paragraphs 9-56 | 14-21 |
| Y | CN 110993933 A (ZHAOQING AOYOU POWER BATTERY CO., LTD.) 10 April 2020 (2020-04-10)<br>description, paragraphs 4-34 | 14-21 |
| X | CN 115411363 A (SUNWODA ELECTRIC VEHICLE BATTERY CO., LTD.) 29 November 2022 (2022-11-29)<br>description, paragraphs 28-62 | 1-3, 8-13, 22 |
| X | JP 2008300125 A (BRIDGESTONE CORP.) 11 December 2008 (2008-12-11)<br>description, paragraphs [0009]-[0031] | 1-3, 8-13, 22 |
| A | CN 115498258 A (SHENZHEN DEFANGCHUANGYU NEW ENERGY TECHNOLOGY CO., LTD.) 20 December 2022 (2022-12-20)<br>entire document | 1-22 |

Form PCT/ISA/210 (second sheet) (July 2022)

**INTERNATIONAL SEARCH REPORT**
**Information on patent family members**

International application No.
**PCT/CN2023/083749**

| Patent document cited in search report | | | Publication date (day/month/year) | Patent family member(s) | | | Publication date (day/month/year) |
|---|---|---|---|---|---|---|---|
| CN | 112635822 | A | 09 April 2021 | WO | 2021057278 | A1 | 01 April 2021 |
| | | | | EP | 3869606 | A1 | 25 August 2021 |
| | | | | CN | 112635822 | B | 09 November 2021 |
| | | | | US | 2022021020 | A1 | 20 January 2022 |
| | | | | EP | 3869606 | A4 | 20 April 2022 |
| | | | | EP | 3869606 | B1 | 12 October 2022 |
| | | | | US | 11522214 | B2 | 06 December 2022 |
| CN | 103367804 | A | 23 October 2013 | CN | 103367804 | B | 18 November 2015 |
| JP | 2003317800 | A | 07 November 2003 | | None | | |
| CN | 108232343 | A | 29 June 2018 | CN | 108232343 | B | 14 February 2020 |
| CN | 110993933 | A | 10 April 2020 | | None | | |
| CN | 115411363 | A | 29 November 2022 | | None | | |
| JP | 2008300125 | A | 11 December 2008 | | None | | |
| CN | 115498258 | A | 20 December 2022 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 19024-82-9
- *CHEMICAL ABSTRACTS*, 1174909-88-6
- *CHEMICAL ABSTRACTS*, 1623-19-4
- *CHEMICAL ABSTRACTS*, 1174909-81-9
- *CHEMICAL ABSTRACTS*, 876499-07-9
- *CHEMICAL ABSTRACTS*, 18293-74-8
- *CHEMICAL ABSTRACTS*, 1902915-70-1
- *CHEMICAL ABSTRACTS*, 1174910-20-3
- *CHEMICAL ABSTRACTS*, 7727-45-9
- *CHEMICAL ABSTRACTS*, 478359-99-8
- *CHEMICAL ABSTRACTS*, 1158919-36-8
- *CHEMICAL ABSTRACTS*, 1693-71-6
- *CHEMICAL ABSTRACTS*, 4851-64-3
- *CHEMICAL ABSTRACTS*, 177786-93-5
- *CHEMICAL ABSTRACTS*, 63249-66-1
- *CHEMICAL ABSTRACTS*, 93386-82-4
- *CHEMICAL ABSTRACTS*, 18339-86-1
- *CHEMICAL ABSTRACTS*, 90011-01-1
- *CHEMICAL ABSTRACTS*, 5700-28-7
- *CHEMICAL ABSTRACTS*, 129078-99-5
- *CHEMICAL ABSTRACTS*, 1067-43-2
- *CHEMICAL ABSTRACTS*, 177786-92-4